# EUROPEAN PATENT APPLICATION

(11) **EP 4 832 615 A1**
(43) Date of publication of application: **28.10.2026**
(21) Application number: 24906416.3
(22) Date of filing: 18.12.2024
(51) Int. Cl.: H04W 72/0453

(54) **WIRELESS COMMUNICATION METHODS, APPARATUS AND DEVICE**

(30) Priority: 19.12.2023 CN 202311764311
(71) Applicant: Vivo Mobile Communication Co., Ltd., Dongguan, Guangdong 523863 (CN)
(72) Inventor: LIU, Siqi, Dongguan, Guangdong 523863 (CN); LIN, Zhipeng, Dongguan, Guangdong 523863 (CN); JI, Zichao, Dongguan, Guangdong 523863 (CN)
(74) Representative: Studio Torta S.p.A.
(86) International application number: PCT/CN2024/140372
(87) International publication number: WO 2025/130937

(57) **Abstract**

This application discloses a wireless communication method and apparatus, and a device, and pertains to the communication field. The wireless communication method in embodiments of this application includes: A terminal detects or receives a reference signal sequence of a first object. A mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limit of the first object, and an index or a number of the first object. The second information includes at least one of the following: a frequency band corresponding to the type of the first object, a frequency range corresponding to the type of the first object, and a resource type corresponding to the type of the first object.

## Description

### CROSS-REFERENCE TO RELATED APPLICATIONS

This application claims priority to Chinese Patent Application No. 202311764311.0, filed with the China National Intellectual Property Administration on December 19, 2023 and entitled "WIRELESS COMMUNICATION METHOD, APPARATUS, AND DEVICE", which is incorporated herein by reference in its entirety.

### TECHNICAL FIELD

This application relates to the communication field, and more specifically, to a wireless communication method and apparatus, and a device.

### BACKGROUND

With evolution of communication technologies, for example, application scenarios of 6G are more than those of 4G or 5G, and there are many terminal types that need to be supported for access. In this case, a plurality of types of objects (for example, a synchronization signal and a broadcast signal) need to be supported. Characteristics (for example, a period, a bandwidth, search complexity, a time-frequency domain resource, carried information, and a generation manner) of objects of different types may be different, and objects of different types may be not limited to a half-frame window. Because features such as periods and time-frequency domain resources of objects of different types are no longer the same, and the objects of different types may be not limited to the half-frame window, a current mapping manner of reference signal sequences cannot meet requirements of the objects of different types. Therefore, how to determine a mapping manner of reference signal sequences of objects of different types is a problem that needs to be resolved.

### SUMMARY

Embodiments of this application provide a wireless communication method and apparatus, and a device, which can resolve a problem that a current reference signal sequence mapping manner cannot satisfy requirements of objects of different types.

According to a first aspect, a wireless communication method is provided, and includes:
A terminal detects or receives a reference signal sequence of a first object.

A mapping manner of the reference signal sequence of the first object is related to first information, or a mapping manner of the reference signal sequence of the first object is related to second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a second aspect, a wireless communication method is provided, and includes:
A network side device sends a reference signal sequence of a first object.

A mapping manner of the reference signal sequence of the first object is related to first information, or a mapping manner of the reference signal sequence of the first object is related to second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a third aspect, a wireless communication apparatus is provided, and includes:
a transceiver unit, configured to detect or receive a reference signal sequence of a first object.

A mapping manner of the reference signal sequence of the first object is related to first information, or a mapping manner of the reference signal sequence of the first object is related to second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a fourth aspect, a wireless communication apparatus is provided, and includes:
a transceiver unit, configured to send a reference signal sequence of a first object.

A mapping manner of the reference signal sequence of the first object is related to first information, or a mapping manner of the reference signal sequence of the first object is related to second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a fifth aspect, a terminal is provided. The terminal includes a transceiver, a processor, and a memory. The memory stores a program or instructions capable of being run on the processor. When the program or the instructions are executed by the processor, the steps of the method according to the first aspect are implemented.

According to a sixth aspect, a terminal is provided, and includes a processor and a communication interface.

The communication interface is configured to detect or receive a reference signal sequence of a first object.

A mapping manner of the reference signal sequence of the first object is related to the first information, or a mapping manner of the reference signal sequence of the first object is related to the second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a seventh aspect, a network side device is provided. The network side device includes a transceiver, a processor, and a memory. The memory stores a program or instructions capable of being run on the processor. When the program or the instructions are executed by the processor, the steps of the method according to the second aspect are implemented.

According to an eighth aspect, a network side device is provided, and includes a processor and a communication interface.

The communication interface is configured to send a reference signal sequence of a first object.

A mapping manner of the reference signal sequence of the first object is related to the first information, or a mapping manner of the reference signal sequence of the first object is related to the second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

According to a ninth aspect, a readable storage medium is provided. The readable storage medium stores a program or instructions. When the program or the instructions are executed by the processor, the steps of the method according to the first aspect are implemented, or the steps of the method according to the second aspect are implemented.

According to a tenth aspect, a wireless communication system is provided, and includes a terminal and a network side device. The terminal is configured to perform the steps of the method according to the first aspect, and the network side device is configured to perform the steps of the method according to the second aspect.

According to an eleventh aspect, a chip is provided. The chip includes a processor and a communication interface. The communication interface is coupled to the processor, and the processor is configured to run a program or instructions, to implement the method according to the first aspect, or implement the method according to the second aspect.

According to a twelfth aspect, a computer program/program product is provided. The computer program/program product is stored in a storage medium, and the program/program product is executed by at least one processor, to implement the steps of the wireless communication method according to the first aspect or the second aspect.

In this embodiment of this application, a mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limit of the first object, and an index or a number of the first object. The second information includes at least one of the following: a frequency band corresponding to the type of the first object, a frequency range corresponding to the type of the first object, and a resource type corresponding to the type of the first object. In this embodiment of this application, the mapping manner of the reference signal sequence of the first object may be determined based on the first information or the second information, to determine mapping manners of reference signal sequences of objects of different types. When detecting or receiving an object, the terminal may determine an object type based on the mapping manner of the reference signal sequence, and may also determine features (for example, a period, a bandwidth, search complexity, a time-frequency domain resource, carried information, and a generation manner) of objects of different types, to reduce complexity of detecting objects of different types.

### BRIEF DESCRIPTION OF THE DRAWINGS

To describe technical solutions in embodiments of this application more clearly, the following briefly describes accompanying drawings required for describing embodiments of this application. Apparently, the accompanying drawings in the following description show merely some embodiments of this application, and a person of ordinary skill in the art may still derive other accompanying drawings from these accompanying drawings without creative efforts.
FIG. 1 is a schematic diagram of an architecture of a communication system according to an embodiment of this application;
FIG. 2 is a schematic diagram of a structure of an SSB according to this application;
FIG. 3 is a schematic flowchart of a wireless communication method according to an embodiment of this application;
FIG. 4 is a schematic block diagram of a wireless communication apparatus according to an embodiment of this application;
FIG. 5 is a schematic block diagram of another wireless communication apparatus according to an embodiment of this application;
FIG. 6 is a schematic block diagram of a communication device according to an embodiment of this application;
FIG. 7 is a schematic diagram of a hardware structure of a terminal according to an embodiment of this application; and
FIG. 8 is a schematic block diagram of a network side device according to an embodiment of this application.

### DETAILED DESCRIPTION

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application fall within the protection scope of this application.

In this application, the terms "first", "second", and the like are intended to distinguish between similar objects but are not used to indicate a specific order or sequence. It should be understood that the terms used in this way is interchangeable in proper circumstances, so that embodiments of this application can be implemented in an order other than the order illustrated or described herein. In addition, objects distinguished by "first" and "second" are usually of one type, and a quantity of objects is not limited. For example, there may be one or more first objects. In addition, "or" in this application indicates at least one of connected objects. For example, "A or B" covers three solutions, that is, a solution 1: including A and excluding B; a solution two: including B and excluding A; and a solution 3: including both A and B. A character "/" usually indicates an "or" relationship between the associated objects.

A term "indication" in this application may be a direct indication (or an explicit indication), or may be an indirect indication (or an implicit indication). The direct indication may be understood as that a sending party explicitly notifies a receiving party of content such as specific information, an operation that needs to be performed, or a request result in a sent indication. The indirect indication may be understood as that the receiving party determines corresponding information based on an indication sent by the sending party, or performs determining and determines an operation that needs to be performed or a request result based on a determining result.

It should be noted that the technology described in embodiments of this application is not limited to an internet of things (Internet of Things, IoT) system, but may further be applied to another wireless communication system, for example, a long term evolution (Long Term Evolution, LTE)/LTE advanced (LTE-Advanced, LTE-A) system, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), a wireless local area network (Wireless Local Area Networks, WLAN), wireless fidelity (Wireless Fidelity, Wi-Fi), a Bluetooth system, or another system. Terms "system" and "network" in embodiments of this application are usually used interchangeably, and the described technologies may be applied to the systems and radio technologies mentioned above, or may be applied to other systems and radio technologies. The following descriptions describe a New Radio (NR) system for example purposes, and NR terms are used in most of the following descriptions. However, the technologies may also be applied to a system other than the NR system, for example, a 6^{th} generation (6^{th} Generation, 6G) communication system.

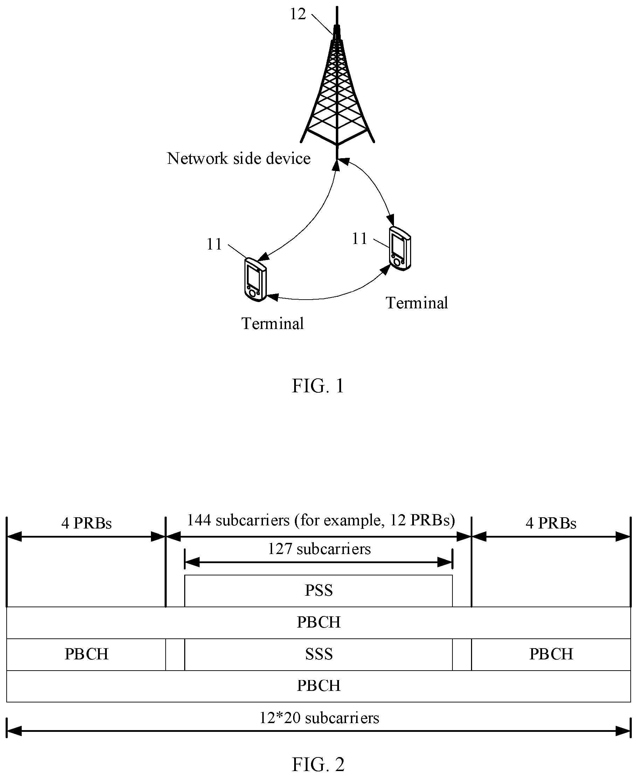

FIG. 1 is a schematic block diagram of a wireless communication system to which an embodiment of this application may be applied. The wireless communication system includes a terminal 11 and a network side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle-mounted device (Vehicle User Equipment, VUE), a ship-mounted device, pedestrian terminal (Pedestrian User Equipment, PUE), a smart household (a household device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headset, smart glasses, smart jewelry (a smart bangle, a smart bracelet, a smart ring, a smart necklace, a smart ankle bangle, a smart anklet, and the like), a smart wristband, smart clothing, and the like. The vehicle-mounted device may also be referred to as a vehicle-mounted terminal, a vehicle-mounted controller, a vehicle-mounted module, a vehicle-mounted component, a vehicle-mounted chip, a vehicle-mounted unit, or the like. It should be noted that in embodiments of this application, a specific type of the terminal 11 is not limited.

The network side device 12 may include an access network device or a core network device.

The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (HNB), a home evolved NodeB (home evolved NodeB), a transmission reception point (Transmission Reception Point, TRP), or another suitable term in the art. As long as same technical effects are achieved, the base station is not limited to a specific technical word. It should be noted that the base station in the NR system is used only as an example for description in embodiments of this application, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF or L-NEF), a binding support function (Binding Support Function, BSF), an application function (Application Function, AF), a network data analytics function (Network Data Analytics Function, NWDAF), a location management function (Location Management Function, LMF), and the like. It should be noted that the core network device in the NR system is used only as an example for description in embodiments of this application, and a specific type of the core network device is not limited.

For ease of better understanding this embodiment of this application, this embodiment of this application is described by using an example in which an object is a synchronization signal block (Synchronization Signal Block, SSB).

To enable the terminal to discover a proper cell and achieve synchronization with a selected cell, a network usually needs to broadcast a synchronization signal and provide specific primary information about the cell. Specifically, the SSB may be shown in FIG. 2. A synchronization signal (Synchronization Signal, SS) mainly include a primary synchronization signal (Primary Synchronization Signal, PSS) and a secondary synchronization signal (Secondary Synchronization Signal, SSS). The PSS and the SSS may occupy 127 subcarriers, and physical broadcast channels (Physical Broadcast Channel, PBCH) on two sides of the SSS may occupy four physical resource blocks (physical resource block, PRB). The PBCH may carry main system information, and is also referred to as a master information block (Master Information Block).

It should be noted that the SSB may also be referred to as a synchronization signal/physical broadcast channel block (synchronization signal/physical broadcast channel block, SS/PBCH block).

For ease of better understanding this embodiment of this application, a part of procedures of a PBCH generation method are described.

A 5G PBCH includes 32 bits (bit), and the PBCH does not change within each 80 ms.
1. A PBCH generated by a higher layer includes 24 bits.
2. A PBCH generated by a physical layer includes 8 bits. The 8 bits mainly include information related to SSB combination within 80 ms, for example, 1 to 4 least significant bits (Least Significant Bit, LSB) of a system frame number (System Frame Number, SFN), 3-bit most significant bits (Most Significant Bit, MSB) of an SSB index (index) (for a low frequency, three bits corresponding to the 3-bit MSB of the SSB index are not used to carry the SSB index, but are still generated by the physical layer), and a half frame indicator (half frame indicator, HFI).
3. The bits generated by the higher layer and the physical layer are concatenated into a 32-bit PBCH payload (payload).
   (1) Performing first-layer scrambling: A part of bits among bits generated by the physical layer are not scrambled, that is, the 3 MSB of the SSB index (or the 3 bits corresponding to the low frequency), the HFI, and the 2^{nd}/3^{rd} LSB of the SFN of the PBCH are not scrambled, and other bits of the PBCH payload (payload) are scrambled.
      A. In first-layer scrambling, a scrambling code sequence is related to a physical cell identifier (Physical Cell Identifier, PCI) and the 2^{nd}/3^{rd} LSB of the SFN carried in the PBCH.
      B. Because first scrambling is not performed for the 2^{nd}/3^{rd} LSB of the SFN, the 2^{nd}/3^{rd} LSB of the SFN may be determined after PBCH decoding, so that a first-layer scrambling code is determined, descrambling may be directly performed without a plurality of hypotheses and attempts, which reduces complexity.
   (2) A cyclical redundancy check (Cyclical Redundancy Check, CRC) is generated, and channel coding is performed on the PBCH payload.
      A. A basic idea of first-layer scrambling is: Different bit parts of content of two SSBs that may be combined are not scrambled, and same parts of the content of the two SSBs that may be combined are scrambled.
      B. Because first scrambling is not performed on the bits with different content, a user may determine positions of the unscrambled bits in a coded bit string before PBCH payload decoding. After receiving SSBs in a plurality of periods, the user may directly combine the bit parts with same SSB content, which improves a decoding success rate.
   (3) Performing second-layer scrambling: Bits obtained after channel coding are collectively scrambled.
      A. In second-layer scrambling, scrambling sequences corresponding to different SSBs are only related to SSB indexes or HFIs carried in the PCI and a demodulation reference signal (Demodulation Reference Signal, DMRS).
      B. Therefore, when performing second descrambling, the user may directly derive a second-layer scrambling code sequence based on related information obtained in detection processes of the DMRS and the synchronization signal without a plurality of hypotheses and attempts, which reduces complexity.
4. Quadrant phase shift keying (Quadrature Phase Shift Keying, QPSK) modulation, resource mapping, and the like are performed.

It can be learned from the foregoing analysis that a two-layer scrambling design can ensure that the terminal can decode the PBCH in a short time with low complexity.

For ease of better understanding this embodiment of this application, a synchronization raster and a GSCN are described.

In 5G NR, the synchronization raster (Synchronization raster) is defined for 0 to 100 GHz, and a number of the synchronization raster is referred to as the GSCN. The base station may send an SSB (also referred to as a synchronization signal/physical broadcast channel block (SS/PBCH block)) on the synchronization raster. A position and calculation of the GSCN in different frequency domain ranges are shown in Table 1.

For example, when GSCN=2, it may be deduced that N=1 and M=1, and a corresponding frequency domain position is 1250 kHz.

**Table 1**

| **Frequency range** | **SS Block frequency position SS_{REF}** | **GSCN** | **Range of GSCN** |
|---|---|---|---|
| 0-3000 MHz | N*1200 kHz+M*50 kHz | 3N+(M-3)/2 | 2-7498 |
| | N=1:2499, M∈{1, 3, 5} (Note 1) | | |
| 3000-24250 MHz | 3000 MHz+N*1.44 MHz | 7499+N | 7499-22255 |
| | N=0:14756 | | |
| 24250-100000 MHz | 24250.08 MHz+N*17.28 MHz | 22256+N | [22256-26639] |
| | N=0:4383 | | |
| NOTE 1: The default value for operating bands with SCS spaced channel raster is M = 3. | | | |

Based on frequency domain planning of NR, supported channel bandwidths are respectively defined for different operating frequency bands (band) based on different subcarrier spacings (subcarrier spacing, SCS). Table 2 below shows related information of a channel bandwidth of a band n1. For example, for the band n1, when an SCS of transmitted data/control signals is 15 kHz, a smallest channel bandwidth on the band is 5 MHz.

**Table 2**

| | **NR band/SCS/UE channel bandwidth** | | | | | | | | | | | | |
|---|---|---|---|---|---|---|---|---|---|---|---|---|---|
| **NR band** | **SCS kHz** | **5 MHz** | **10 MHz** | **15 MHz** | **20 MHz** | **25 MHz** | **30 MHz** | **40 MHz** | **50 MHz** | **60 MHz** | **80 MHz** | **90⁴ MHz** | **100 MHz** |
| | 15 | Yes | Yes | Yes | Yes | | | | | | | | |
| n1 | 30 | | Yes | Yes | Yes | | | | | | | | |
| | 60 | | Yes | Yes | Yes | | | | | | | | |

In NR, a GSCN range and a step size (step size) or an interval are defined for different bands. The step size is a difference between GSCNs of two adjacent synchronization rasters that belong to the band. For example, a GSCN range of n41 is 6246-6714, a step size is 3, and GSCNs within the range of n41 are 6246, 6249, ..., 6714.

It should be noted that different bands may overlap in frequency domain, for example, bands n38 and band n41. It may be learned from Table 3 below that although the two frequency bands overlap, step sizes of GSCNs are different.

**Table 3**

| **NR operating band** | **SS block SCS** | **SS block pattern¹** | **Range of GSCN (First-<Step size>-Last)** |
|---|---|---|---|
| n38 | 15 kHz | Case A | 6431-<1>-6544 |
| n41 | 15 kHz | Case A | 6246-<3>-6714 |
| | 30 kHz | Case C | 6252-<3>-6714 |

For ease of better understanding this embodiment of this application, a channel raster (channel raster) is described.

In NR, the channel raster is defined, and the base station may deploy a channel on the channel raster. The channel raster may be 100 kHz, 15 kHz, 30 kHz, 60 kHz, or 120 kHz.

For example, in Table 4 below, a channel raster in a band n1 is 100 kHz, an NR-ARFCN range corresponding to an uplink frequency domain of the channel raster is 384000-396000, and an NR-ARFCN range corresponding to a downlink frequency domain is 422000-434000. An NR-ARFCN may also be used to indicate a frequency domain position.

**Table 4**

| **NR operating band** | **ΔF_{Raster} (kHz)** | **Uplink Range of N_{REF} (First-<Step size>-Last)** | **Downlink Range of N_{REF} (First-<Step size>-Last)** |
|---|---|---|---|
| n1 | 100 | 384000-<20>-396000 | 422000-<20>-434000 |

It should be noted that different bands may overlap in frequency domain, for example, a band n38 and a band n41. It may be learned from Table 5 below that although the two frequency bands overlap, step sizes of NR-ARFCNs are also different.

**Table 5**

| **NR operating band** | **ΔF_{Raster} (kHz)** | **Uplink Range of N_{REF} (First-<Step size>-Last)** | **Downlink Range of N_{REF} (First-<Step size>-Last)** |
|---|---|---|---|
| n38 | 100 | 514000-<20>-524000 | 514000-<20>-524000 |
| n41 | 15 | 499200-<3>-537999 | 499200-<3>-537999 |
| | 30 | 499200-<6>-537996 | 499200-<6>-537996 |

In a 5G system, the SSB is limited to a half-frame window. Therefore, the HFI is also specially designed in the generation and scrambling procedures. For example, the terminal searches for a synchronization signal on a synchronization raster (Synchronization raster). For a given SCS, an interval between synchronization rasters in a same frequency band is fixed.

For ease of understanding the technical solutions of embodiments of this application, the following describes the technical solutions of this application in detail by using specific embodiments. The foregoing related technologies, as optional solutions, may be randomly combined with the technical solutions of embodiments of this application, and all fall within the protection scope of embodiments of this application. This embodiment of this application includes at least a part of the following content.

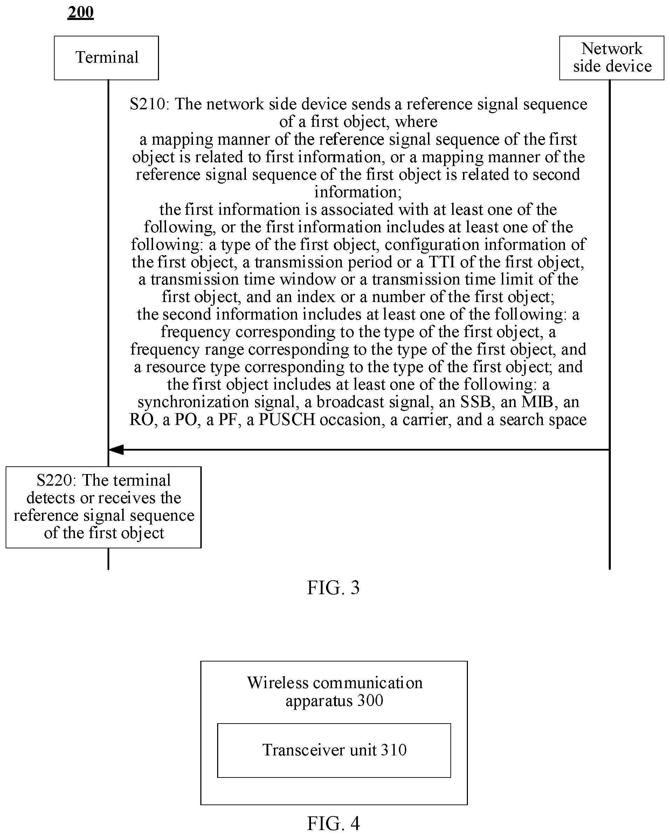

FIG. 3 is a schematic flowchart of a wireless communication method 200 according to an embodiment of this application. As shown in FIG. 3, the wireless communication method 200 may include at least a part of the following content.

S210: A network side device sends a reference signal sequence of a first object.

A mapping manner of the reference signal sequence of the first object is related to first information, or a mapping manner of the reference signal sequence of the first object is related to second information.

The first information is associated with at least one of the following, or the first information includes at least one of the following: a type of the first object, configuration information of the first object, a transmission period or a TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, an SSB, an MIB, an RO, a PO, a PF, a PUSCH occasion, a carrier, and a search space.

S220: A terminal detects or receives the reference signal sequence of the first object.

It should be understood that FIG. 3 shows steps or operations of the wireless communication method 200. However, these steps or operations are merely examples. Other operations or variations of various operations in FIG. 3 may be further performed in this embodiment of this application.

In this embodiment of this application, "transmission" may refer to sending or receiving. For example, the terminal may perform receiving, detection, or sending in a transmission period of the first object, or the network side device may perform receiving or sending in a transmission period of the first object. For another example, the terminal may perform receiving, detection, or sending within the transmission time window or the transmission time limit of the first object, or the network side device may perform receiving or sending within the transmission time window or the transmission time limit of the first object.

In this embodiment of this application, "the transmission period or the transmission time interval (Transmission Time Interval, TTI) of the first object" may alternatively be a transmission period or a TTI of other information associated with the first object. This is not limited in embodiments of this application.

In this embodiment of this application, the SSB may also be referred to as any information block or resource block including at least one of a synchronization signal, a broadcast signal, a broadcast channel (PBCH), and a downlink broadcast channel of another system message.

In this embodiment of this application, an SSB type or an SSB group type may also be referred to as a "structure" or a "format" of the synchronization signal, the broadcast channel, or the downlink broadcast channel of another system message.

In some embodiments, the resource type corresponding to the type of the first object includes, but is not limited to, at least one of the following:
a carrier type, a bandwidth part (Bandwidth Part, BWP) type, and a frequency band type.

Optionally, the carrier type may include, but is not limited to, at least one of the following:
FR1, FR2, FR2-1, FR2-2, FR2-3, authorized, unauthorized, frequency division duplex (Frequency Division Duplex, FDD), and time division duplex (Time Division Duplex, TDD).

In some embodiments, the mapping manner of the reference signal sequence of the first object may be specifically a position of a resource to which the reference signal sequence of the first object is mapped. Optionally, the position to which the reference signal sequence of the first object is mapped includes but is not limited to at least one of the following: a time domain position and a frequency domain position.

For example, the first information is associated with the type of the first object, or the first information includes the type of the first object. In this case, the mapping manner of the reference signal sequence of the first object may be determined based on the type of the first object. This embodiment may be applicable to objects of different types, so that mapping manners of reference signal sequences of objects of different types can be determined.

For example, the first information is associated with the configuration information of the first object, or the first information includes the configuration information of the first object. In this case, the mapping manner of the reference signal sequence of the first object may be determined based on the configuration information of the first object. This embodiment may be applicable to objects of different types, so that mapping manners of reference signal sequences of objects of different types can be determined.

For example, the first information is associated with the transmission period or the TTI of the first object, or the first information includes the transmission period or the TTI of the first object. In this case, the mapping manner of the reference signal sequence of the first object may be determined based on the transmission period or the TTI of the first object. This embodiment may be applicable to objects of different types, so that mapping manners of reference signal sequences of objects of different types can be determined.

For example, the first information is associated with the transmission time window or the transmission time limit of the first object, or the first information includes the transmission time window or the transmission time limit of the first object. In this case, the mapping manner of the reference signal sequence of the first object may be determined based on the transmission time window or the transmission time limit of the first object. This embodiment may be applicable to objects of different types, so that mapping manners of reference signal sequences of objects of different types can be determined.

For example, the first information is associated with the index or the number of the first object, or the first information includes the index or the number of the first object. In this case, the mapping manner of the reference signal sequence of the first object may be determined based on the index or the number of the first object. This embodiment may be applicable to objects of different types, so that mapping manners of reference signal sequences of objects of different types can be determined.

For example, the second information includes at least one of the following: a frequency band corresponding to the type of the first object, a frequency range corresponding to the type of the first object, and a resource type corresponding to the type of the first object. In this case, the mapping manner of the reference signal sequence of the first object may be determined based on the second information. This embodiment may be applicable to objects of different types, so that mapping manners of reference signal sequences of objects of different types can be determined.

In this embodiment of this application, a mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limit of the first object, and an index or a number of the first object. The second information includes at least one of the following: a frequency band corresponding to the type of the first object, a frequency range corresponding to the type of the first object, and a resource type corresponding to the type of the first object. In this embodiment of this application, that the mapping manner of the reference signal sequence of the first object may be determined based on the first information or the second information is also applicable to objects of other types, so that mapping manners of reference signal sequences of objects of different types may be determined. The terminal can detect or receive the objects of different types, which can reduce complexity of detecting the objects of the different types, and can also reduce interference between different objects or interference between objects of different types.

In some embodiments, this embodiment of this application may support a scenario in which one cell includes at least two carriers, or at least two activated BWPs, or at least two resource sets.

In some embodiments, the reference signal sequence of the first object may include, but is not limited to, at least one of the following:
a DMRS sequence and a sequence of a reference signal associated with the first object.

Optionally, the reference signal associated with the first object includes but is not limited to at least one of the following:
a channel state information reference signal (Channel State Information Reference Signal, CSI-RS) and a positioning reference signal (positioning reference signals, PRS).

For example, the reference signal sequence of the first object may further include another sequence. This is not limited in this application.

In some embodiments, the first object includes, but is not limited to, at least one of the following:
a synchronization signal, a broadcast signal, an SSB, a master information block (Master Information Block, MIB), a RACH occasion (RACH Occasion, RO), a paging occasion (Paging Occasion, PO), a paging frame (Paging Frame, PF), a Physical Uplink Shared Channel (Physical Uplink Shared Channel, PUSCH), a carrier, and a search space (Search Space, SS).

In some embodiments, the objects of different types include, but are not limited to, at least one of the following features:
used for different purposes (for example, used for cell search, used for assisting in determining timing advance (Timing Advance, TA), used for verifying validation (validation), used for validation based on the TA, used for beam management (beam management, BM), used for measurement, used for an object that persistently exists or an object that is mandatorily transmitted, and used for an object that is triggered on demand or an object that is transmitted on demand), where it should be particularly noted that transmission may be interpreted as sending or receiving;
corresponding to different terminal types (for example, a reduced capability (Reduced Capability, RedCap) terminal, a smartphone (smartphone), different types of IoT devices, different types of ambient internet of things (Ambient Internet of Things, A-IoT) devices, terminals of different power classes, and different cyclic prefix extension (cyclic prefix extension, CPE));
corresponding to different network types (such as a terrestrial communication network (Terrestrial Network, TN), a non-terrestrial communication network (Non-Terrestrial Network, NTN), an IoT network, and a non-IoT network);
corresponding to synchronization signals of different types;
corresponding to broadcast signals of different types;
corresponding to different bandwidth parts (Bandwidth Part, BWP);
corresponding to different time-frequency resource blocks;
corresponding to different duplex modes (for example, full duplex (full duplex) and half duplex (half duplex));
corresponding to different access modes or access methods;
corresponding to different cells (for example, a macro cell (macro cell) and a small cell (small cell));
corresponding to different transmission reception point (Transmission Reception Point, TRP) types (for example, a multi-TRP (MTRP) or a single TRP);
corresponding to different waveforms (for example, a Cyclic Prefix-Orthogonal Frequency Division Multiplexing (Cyclic Prefix-Orthogonal Frequency Division Multiplexing, CP-OFDM) waveform, a discrete Fourier transform spread orthogonal frequency division multiplexing (Discrete Fourier Transform-Spread-Orthogonal Frequency Division Multiplexing, DFT-S-OFDM) waveform, or an orthogonal time and frequency space (orthogonal time and frequency space, OTFS) waveform);
corresponding to different RAN services (for example, a sensing (sensing) service, an NTN service, a low power synchronization signal (LP-SS) service, and a wake-up signal (Wake-up signal, WUS) service);
corresponding to different network energy saving features (for example, related to a long/short period of the SSB, whether paging (paging)/a system information block (System Information Block, SIB)/a random access channel (Random Access Channel, RACH)/or the like is enabled, or a paging/SIB/RACH cycle);
corresponding to different SSB periods;
corresponding to different measurement periods;
corresponding to different other related signal periods (for example, the paging/SIB/RACH period); and
corresponding to different high-layer protocol features (for example, whether a special service such as a data plane, an NPN, or a simplified protocol stack is enabled for a high-layer protocol).

In some embodiments, the configuration information of the first object includes, but is not limited to, at least one of the following:
BWP information; time domain resource information (for example, a time domain resource block); frequency domain resource information (for example, a frequency domain resource block); duplex mode information (for example, full duplex or half duplex); an access manner or method; type information of a cell (for example, a macro cell or a small cell); TRP type information (for example, a multi-TRP or a single TRP); waveform information (for example, a CP-OFDM waveform, a DFT-S-OFDM waveform, or an OTFS waveform); RAN service information (for example, a sensing service, an NTN service, a low power synchronization signal (LP-SS) service, or a WUS service); energy saving feature information (for example, related to a long/short period of the SSB, whether paging/SIB/RACH/ or the like is enabled, or a paging/SIB/RACH cycle); period information; high-layer feature information (for example, whether a special service such as a data plane, an NPN, or a simplified protocol stack is enabled for a high-layer protocol); transmission manner information; destination information (for example, used for cell search, used for assisting in determining TA, used for verifying validation, used for validation based on the TA, used for BM, used for measurement, used for an object that persistently exists or an object that is mandatorily transmitted, and used for an object that is triggered on demand or an object that is transmitted on demand); terminal information (for example, whether the terminal is a RedCap terminal, whether the terminal is a smartphone, whether the terminal is an IoT device, whether the terminal is an A-IoT device, power class information, or CPE information); and network side device information (for example, whether the network side device is a TN, whether the network side device is an NTN, whether the network side device is an IoT network, or whether the network side device is a non-IoT network).

Optionally, the transmission manner information may include at least one of the following:
whether the first object is transmitted in time domain a plurality of times; whether the transmission time window of the first object includes a plurality of first objects; whether the first object is transmitted in frequency domain a plurality of times; whether a specific bandwidth includes a plurality of first objects; whether continuous time domain is used to transmit the first object; whether continuous frequency domain is used to transmit the first object (for example, if the transmission is performed in frequency domain a plurality of times, whether the transmission is performed on continuous resources, and whether there is an interval); whether discrete time domain resources are used to transmit the first object (for example, interlace (interlace) transmission is performed); whether discrete frequency domain resources are used to transmit the first object (for example, interlace (interlace) transmission is performed); whether the reference signal sequence of the first object is transmitted in time domain a plurality of times; whether the transmission time window of the first object includes a plurality of reference signal sequences of the first object; whether the reference signal sequence of the first object is transmitted in frequency domain a plurality of times; whether a specific bandwidth includes a plurality of reference signal sequences of the first object; whether continuous time domain is used to transmit the reference signal sequence of the first object; whether continuous frequency domain is used to transmit the reference signal sequence of the first object (for example, if the transmission is performed in frequency domain a plurality of times, whether the transmission is performed on continuous resources, and whether there is an interval); whether discrete time domain resources are used to transmit the reference signal sequence of the first object (for example, interlace (interlace) transmission is performed); and whether discrete frequency domain resources are used to transmit the reference signal sequence of the first object (for example, interlace (interlace) transmission is performed).

In some embodiments, when the mapping manner of the reference signal sequence of the first object is related to the first information, a position to which the reference signal sequence of the first object is mapped may be determined based on the first information.

In some embodiments, when the mapping manner of the reference signal sequence of the first object is related to the first information, a position to which the reference signal sequence of the first object is mapped is determined based on first position information.

The first position information includes at least one of the following: a first reference position, a first offset, a first start position, a first step size, a first synchronization raster, and a first channel raster.

The first position information is related to the first information.

In this embodiment, the position, at which the reference signal sequence of the first object is mapped, determined based on the first position information is a position to which the reference signal sequence of the first object is actually mapped, which can reduce interference between reference signal sequences of different objects.

Optionally, the first position information is agreed on through a protocol, or the first position information is configured by a network side.

For example, if the first information is associated with the type of the first object, or the first information includes the type of the first object, and it is assumed that the first object is an SSB, an offset corresponding to an SSB of a type A is frequency domain shift1, and an offset corresponding to an SSB of a type B is frequency domain shift2, reference signal sequences of the two types of objects may be mapped on different resource elements (RE), so that the reference signal sequences of the two types of objects do not interfere with each other.

In some embodiments, that the first position information is related to the first information includes:
the first position information is determined based on a value of at least a part of bits of the first information; or
the first position information is determined based on a value of at least a part of bits of the first information and an identifier of at least one physical resource. Optionally, each of the at least one physical resource is one of the following: a cell, a carrier, a BWP, a resource pool, a frequency band (band), and a subband (subband). For example, a cell identifier may be a PCI.

In some embodiments, when the first position information is determined based on the value of the at least part of bits of the first information, the first position information is determined based on a result of the value of the at least part of bits of the first information mod C.

C represents a frequency domain interval between two adjacent reference signal resources, or C represents a value of a frequency domain interval between two adjacent reference signal resources plus 1, or C represents an interval between two adjacent objects, or C represents a total quantity of object types, and mod represents a modulo operation.

Types of the two adjacent objects are the same as the type of the first object.

For example, if the first position information is determined based on the value of the at least part of bits of the first information, first position information=value of the at least part of bits of the first information mod C.

It should be understood that if C=1, it indicates that mod C is actually not performed.

In some embodiments, when the first position information is determined based on the value of at least part of bits of the first information and the identifier of the at least one physical resource, the first position information is determined based on a result of (value of the at least part of bits of the first information mod C)*D+ID mod D, or the first position information is determined based on a result of the value of the at least part of bits of the first information mod C+(ID mod D)*C, or the first position information is determined based on a result of [(value of the at least part of bits of the first information mod C)*D+ID mod D] mod E, or the first position information is determined based on a result of [(value of the at least part of bits of the first information mod C+(ID mod D)*C)] mod E.

C represents a frequency domain interval between two adjacent reference signal resources, or C represents a value of a frequency domain interval between two adjacent reference signal resources plus 1, or C represents an interval between two adjacent objects, or C represents a total quantity of object types.

D represents a frequency domain interval between two adjacent reference signal resources, or D represents a value of a frequency domain interval between two adjacent reference signal resources plus 1, or D represents an interval between two adjacent objects, or D represents a total quantity of object types.

E represents a frequency domain interval between two adjacent reference signal resources, or E represents a value of a frequency domain interval between two adjacent reference signal resources plus 1, or E represents an interval between two adjacent objects, or E represents a total quantity of object types.

ID represents the identifier of the at least one physical resource, types of the two adjacent objects are the same as the type of the first object, and mod represents a modulo operation.

For example, if the first position information is determined based on the value of the at least part of bits of the first information and the identifier of the at least one physical resource, first position information=(value of the at least part of bits of the first information mod C)*D+ID mod D.

For another example, if the first position information is determined based on the value of the at least part of bits of the first information and the identifier of the at least one physical resource, first position information=value of the at least part of bits of the first information mod C+(ID mod D)*C.

For another example, if the first position information is determined based on the value of the at least part of bits of the first information and the identifier of the at least one physical resource, first position information=[(value of the at least part of bits of the first information mod C)*D+ID mod D] mod E.

For still another example, if the first position information is determined based on the value of the at least part of bits of the first information and the identifier of the at least one physical resource, first position information=[(value of the at least part of bits of the first information mod C+(ID mod D)*C)] mod E.

It should be understood that if C=1, it indicates that mod C is actually not performed; if D=1 it indicates that mod D is actually not performed; and if E=1 it indicates that mod E is actually not performed.

In some embodiments, if the first information is associated with the type of the first object, the first information includes type indication information. The type indication information is used to indicate the type of the first object. In this embodiment, mapping manners of reference signal sequences of objects of different types may be distinguished.

In some embodiments, if the first information is associated with the configuration information of the first object, the first information includes configuration indication information. The configuration indication information is used to indicate a configuration of the first object. In this embodiment, mapping manners of reference signal sequences of objects with different configurations may be distinguished.

In some embodiments, when the first information includes the type indication information, the first object supports at least two types, or the first object is configured with at least two types, or the first object allows at least two types. Alternatively, the first object is an object supported by a terminal or a network that supports at least two types of objects. In this embodiment, mapping manners of reference signal sequences of objects of different types may be distinguished.

In some embodiments, when the first information includes the configuration indication information, the first object supports at least two configurations, or the first object is configured with at least two configurations, or the first object allows at least two configurations. In this embodiment, mapping manners of reference signal sequences of objects with different configurations may be distinguished.

In some embodiments, when the first information is associated with the type of the first object, and the first object supports at least two types, or the first object is configured with at least two types, or the first object allows at least two types, the first information is an intersection, a union, an exclusive OR result, a summation result, or an AND result of information bits respectively associated with the at least two types. In this embodiment, mapping manners of reference signal sequences of objects of different types may be distinguished.

In some embodiments, when the first information is associated with the configuration information of the first object, and the first object supports at least two configurations, or the first object is configured with at least two configurations, or the first object allows at least two configurations, the first information is an intersection of information bits respectively associated with the at least two configurations, or the first information is a union of information bits respectively associated with the at least two configurations, or the first information is an exclusive OR result of information bits respectively associated with the at least two configurations, or the first information is a summation result of information bits respectively associated with the at least two configurations, or the first information is an AND result of information bits respectively associated with the at least two configurations. In this embodiment, mapping manners of reference signal sequences corresponding to objects with different attributes may be distinguished.

In some embodiments, the first information is only related to an object of a specific type, or an object of a specific type is configured with the first information. In other words, the first object may be an object of a specific type. For example, for an SSB used for cell search and downlink synchronization, a mapping manner of a reference signal sequence corresponding to the SSB is related to the first information. For an SSB used for obtaining beam management (beam management) or channel state information, a mapping manner of the reference signal sequence corresponding to the SSB is irrelevant to the first information, or is not configured with the first information.

In some embodiments, when the first information is associated with the configuration information of the first object, the first information includes an association relationship between a configuration of the first object and a mapping manner of the reference signal sequence of the first object. In this embodiment, mapping manners of reference signal sequences of objects with different configurations may be distinguished.

Optionally, when the first information includes the association relationship between a configuration of the first object and a mapping manner of the reference signal sequence of the first object, the mapping manner of the reference signal sequence of the first object may be determined based on the configuration of the first object.

In some embodiments, when the first information is associated with the transmission period or the TTI of the first object, the first information includes at least a part of significant bits of frame information (for example, a system frame number (System Frame Number, SFN)) associated with the transmission period or the TTI of the first object.

For example, if the transmission period of the first object is 20 ms or the TTI of the first object is 80 ms, the first information is at least one bit in 2^{nd} and 3^{rd} least significant bits (Least Significant Bit, LSB) of an SFN.

For another example, if the transmission period of the first object is 20 ms or the TTI of the first object is 40 ms, the first information is at least one bit in a 2^{nd} LSB of an SFN.

For another example, if the transmission period of the first object is 20 ms or the TTI of the first object is 160 ms, the first information is at least one bit in 2^{nd}, 3^{rd}, and 4^{th} LSBs of an SFN.

For another example, if the transmission period of the first object is 10 ms or the TTI of the first object is 80 ms, the first information is at least one bit in 1^{st}, 2^{nd}, and 3^{rd} LSBs of an SFN.

For another example, if the transmission period of the first object is 10 ms or the TTI of the first object is 40 ms, the first information is at least one bit in 1^{st} and 2^{nd} LSBs of an SFN.

For another example, if the transmission period of the first object is 10 ms or the TTI of the first object is 20 ms, the first information is at least one bit in a 1^{st} LSB of an SFN.

In some embodiments, the transmission period or the TTI of the first object may be changed, activated, deactivated, or updated.

Optionally, that the transmission period/TTI of the first object is changed, activated, deactivated, or updated is because at least a part (on demand) of the first object is (re)configured, activated, deactivated, released, or covered.

For example, the first object is an SSB, it is assumed that a transmission period of the SSB is 10 ms (all SSBs are considered, including an on-demand SSB (on demand SSB)), and a TTI is 80 ms, and SSBs of all even periods are on-demand SSBs. If the on-demand SSB is not activated, in this case, an actual transmission period of the SSB is twice that when the on-demand SSB is activated, that is, 20 ms, and the first information is the 2^{nd} and 3^{rd} LSBs of the SFN. If the on-demand SSB is activated, in this case, an actual transmission period of the SSB is 10 ms, and the first information is at least one bit in the 1^{st} and 2^{nd} LSBs of the SFN.

Optionally, the transmission period/TTI of the first object being changed is because the transmission period/TTI is configured or reconfigured. For example, a default transmission period/TTI of the first object is switched to a transmission period/TTI that is actually supported by a network, or the transmission period/TTI of the first object is reconfigured through a system message change or radio resource control (Radio Resource Control, RRC).

In some embodiments, when the first information is associated with the transmission period or the TTI of the first object, the first information satisfies one of the following:
associated with a changed transmission period or TTI;
associated with an activated transmission period or TTI;
associated with an updated transmission period or TTI;
associated with a default transmission period or TTI;
associated with all configured transmission periods or TTIs;
associated with a specific transmission period or TTI among all configured transmission periods or TTIs;
associated with a transmission period or a TTI having a largest length among all configured transmission periods or TTIs; and
associated with a transmission period or a TTI having a smallest length among all configured transmission periods or TTIs.

Optionally, the specific transmission period or TTI may be agreed on through a protocol, or the specific transmission period or TTI may be configured by a network side, or the specific transmission period or TTI is a transmission period or TTI having a smallest index or number among all configured transmission periods or TTIs, or the specific transmission period or TTI is a transmission period or TTI having a largest index or number among all configured transmission periods or TTIs.

For example, the first object is an SSB. If the transmission period/TTI may be changed, activated, deactivated, or updated, the first information may be associated with (a/maximum/minimum/entire) transmission period/TTI corresponding to all configured SSBs. For example, in a case of an on-demand SSB, regardless of whether the on-demand SSB is activated, and a corresponding period of the SSB or all SSBs are considered, in this case, it is determined that whether the on-demand SSB is activated does not affect an SFN bit.

In some embodiments, when the first information is associated with the transmission period or TTI of the first object, if information bits (N₁ bits) associated with the updated, changed, activated, or deactivated transmission period or TTI are less than information bits (N₂ bits) associated with a current transmission period or TTI, or information bits (N₁ bits) associated with the updated, changed, activated, or deactivated transmission period or TTI are a subset of information bits (N₂ bits) associated with a current transmission period or TTI, the first information is one of the following:
the information bits associated with the current transmission period or TTI;
the information bits associated with the updated, changed, activated, or deactivated transmission period or TTI;
information bits associated with a default transmission period or TTI;
remaining information bits after a part of the information bits associated with the current transmission period or TTI are taken;
a first specific part of the information bits associated with the current transmission period or TTI;
remaining information bits obtained after a part of the information bits associated with the default transmission period or TTI are taken;
a first specific part of the information bits associated with the default transmission period or TTI;
information bits obtained after at least one bit is filled in the information bits associated with the updated, changed, activated, or deactivated transmission period or TTI; and
remaining information bits obtained after a part of the information bits associated with the updated, changed, activated, or deactivated transmission period or TTI are taken.

It should be noted that the current transmission period or TTI may be a transmission period or a TTI before the update, before the change, before the activation, or before the deactivation.

For example, the first information is the remaining information bits obtained after a part of information bits associated with the current transmission period or TTI are taken, and the remaining information bits obtained after the part of bits are taken are N₁ bits. A high bit is taken, and a low bit is reserved.

For example, the first information is the remaining information bits obtained after a part of information bits associated with the default transmission period or TTI are taken, and the remaining information bits obtained after the part of bits are taken are N₁ bits. Optionally, a high bit is taken, and a low bit is reserved.

For example, the first information is the first specific part of the information bits associated with the current transmission period or TTI, and the first specific part is N₁ bits. Optionally, the first specific part is a low bit.

For example, the first information is the first specific part of the information bits associated with the default transmission period or TTI, and the first specific part is N₁ bits. Optionally, the first specific part is a low bit.

For example, the first information is the information bits obtained after at least one bit is filled in the information bits associated with the updated, changed, activated, or deactivated transmission period or TTI. For example, 0 or 1 is filled before the information bits associated with the updated or changed, activated, or deactivated transmission period or TTI, and N₂ bits are obtained.

In some embodiments, when the first information is associated with the transmission period or TTI, if information bits (N₃ bits) associated with the updated, changed, activated, or deactivated transmission period or TTI are greater than information bits (N₄ bits) associated with a current transmission period or TTI, or information bits (N₄ bits) associated with a current transmission period or TTI are a subset of information bits (N₃ bits) associated with the updated, changed, activated, or deactivated transmission period or TTI, the first information is one of the following:
the information bits associated with the current transmission period or TTI;
the information bits associated with the updated, changed, activated, or deactivated transmission period or TTI;
information bits associated with a default transmission period or TTI;
remaining information bits obtained after a part of the information bits associated with the updated, changed, activated, or deactivated transmission period or TTI are taken;
a second specific part of the information bits associated with the updated, changed, activated, or deactivated transmission period or TTI;
remaining information bits obtained after a part of the information bits associated with the default transmission period or TTI are taken;
a second specific part of the information bits associated with the default transmission period or TTI;
information bits obtained after at least one bit is filled in the information bits associated with the default transmission period or TTI;
information bits obtained after at least one bit is filled in the information bits associated with the current transmission period or TTI; and
remaining information bits after a part of the information bits associated with the current transmission period or TTI are taken.

For example, the first information is the remaining information bits obtained after a part of information bits associated with the updated, changed, activated, or deactivated transmission period or TTI are taken, and the remaining information bits obtained after the part of bits are taken are N₄ bits. A high bit is taken, and a low bit is reserved.

For example, the first information is the remaining information bits obtained after a part of information bits associated with the default transmission period or TTI are taken, and the remaining information bits obtained after the part of bits are taken are N₄ bits. Optionally, a high bit is taken, and a low bit is reserved.

For example, the first information is the second specific part of the information bits associated with the updated, changed, activated, or deactivated transmission period or TTI of the first object, and the second specific part is N₄ bits. Optionally, the second specific part is a low bit.

For example, the first information is the second specific part of the information bits associated with the default transmission period or TTI, and the second specific part is N₄ bits. Optionally, the second specific part is a low bit.

For example, the first information is the information bits obtained after at least one bit is filled in the information bits associated with the default transmission period or TTI. For example, 0 or 1 is filled before the information bits associated with the default transmission period or TTI, and N₃ bits are obtained.

For example, the first information is the information bits obtained after at least one bit is filled in the information bits associated with the current transmission period or TTI. For example, 0 or 1 is filled before the information bits associated with the current transmission period or TTI, and N₃ bits are obtained.

In some embodiments, when the first information is associated with the transmission period or TTI of the first object, if the first object supports at least two types of transmission periods or TTIs, the first information is an intersection, a union, an exclusive OR result, a summation result, or an AND result of information bits respectively associated with the at least two types of transmission periods or TTIs.

For example, the first object supports two types of transmission periods or TTIs. The transmission period of the first object is 20 ms or the TTI of the first object is 160 ms, and the transmission period of the first object is 10 ms or the TTI of the first object 40 ms. The first information is at least one bit in the 1^{st}, 2^{nd}, 3^{rd}, and 4^{th} LSBs of the SFN.

In some embodiments, objects of different types may separately determine the first information based on respective transmission time windows or transmission time limits.

For example, if the transmission period or TTI of the first object is 5 ms, the first information is a 1-bit HFI.

For example, if the transmission period or TTI of the first object is 2 ms, the first information is 4-bit indication information, and the indication information indicates that 2 ms is located at a specific position in a frame.

In some embodiments, when the first information is associated with the transmission time window or transmission time limit of the first object, the first information satisfies one of the following:
associated with a changed transmission time window or transmission time limit;
associated with an activated transmission time window or transmission time limit;
associated with an updated transmission time window or transmission time limit;
associated with a default transmission time window or transmission time limit;
associated with an initial transmission time window or transmission time limit; and
associated with a current transmission time window or transmission time limit;

In some embodiments, if the transmission time window or transmission time limit of the first object is X, the transmission period or TTI of the first object is Y, a quantity of bits of the first information is related to a result of log₂(Y/X), where both X and Y are positive numbers. Optionally, the quantity of bits of the first information is a smallest integer greater than log₂(Y/X).

In some embodiments, when the first information is associated with the transmission time window or transmission time limit of the first object, if the first object supports at least two types of transmission time windows or transmission time limits, the first information is an intersection, a union, an exclusive OR result, a summation result, or an AND result of information bits respectively associated with the at least two types of transmission time windows or transmission time limits, or the first information is information bits whose bit quantity is the largest between the information bits respectively associated with the at least two types of transmission time windows or transmission time limits.

For example, if the first object supports a first type of transmission time window or transmission time limit and a second type of transmission time window or transmission time limit, the first type of transmission time window or transmission time limit is 5 ms, and the second type of transmission time window or transmission time limit is 2 ms, the bit quantity the first information is max(1, 4)=4bits.

In some embodiments, when the first information is associated with the index or number of the first object, if the first object supports at least two types of indexes or numbers, the first information is an intersection, a union, an exclusive OR result, a summation result, or an AND result of information bits respectively associated with the at least two types of indexes or numbers, or the first information is an information bit whose bit quantity is the largest among the information bits respectively associated with the at least two types of indexes or numbers.

For example, the first object is an SSB, and may support two types of indexes (index): a type A and a type B. The type A supports at most eight SSBs, and index information needs three bits. The type B supports at most 16 SSBs, and the index needs four bits. In this case, a mapping manner of a reference signal sequence corresponding to the type A is related to at least a part of bits in the 3-bit index, and a mapping manner of a reference signal sequence corresponding to the type B is related to at least a part of bits in the 4-bit index.

In some embodiments, when the first information is associated with the index or number of the first object, if the first object supports at least two types of index upper limits or number upper limits, the first information is an intersection, a union, an exclusive OR result, a summation result, or an AND result of information bits respectively associated with the at least two types of index upper limits or number upper limits, or the first information is an information bit whose bit quantity is the largest among the information bits respectively associated with the at least two types of index upper limits or number upper limits.

It should be noted that the "index upper limit" may also be understood as a maximum quantity of indexes, and the "number upper limit" may also be understood as a maximum quantity of numbers.

For example, the first object is an SSB, and may support two types of indexes (index): a type A and a type B. The type A supports at most eight SSBs, and index information needs three bits. The type B supports at most 16 SSBs, and the index needs four bits. In this case, a mapping manner of a reference signal sequence corresponding to the type A/B is related to at least a part of bits in the 4-bit index.

In some embodiments, when the mapping manner of the reference signal sequence of the first object is related to the second information, a position to which the reference signal sequence of the first object is mapped may be determined based on the second information.

In some embodiments, when the mapping manner of the reference signal sequence of the first object is related to the second information, a position to which the reference signal sequence of the first object is mapped is determined based on second position information.

The second position information includes at least one of the following: a second reference position, a second offset, a second start position, a second step size, a second synchronization raster, and a second channel raster.

The second position information is related to the second information.

Optionally, the second position information is agreed on through a protocol, or the second position information is configured by a network side.

For example, when one cell supports a plurality of bands (band), mapping of the reference signal sequence of the first object on each band may be different. For example, a time/frequency domain offset (shift) associated with the band is introduced. In this way, mapping of the reference signal sequence of the first object in a multi-band cell uses a shift set. Further, for different cells including a plurality of bands, different shift sets may be used. For example, the shift set may depend on the PCI to reduce interference between reference signal sequences of such cells.

In some embodiments, the mapping manner of the reference signal sequence of the first object includes, but is not limited to, at least one of the following: a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In this embodiment, the mapping manner of the reference signal sequence of the first object may be determined based on at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped. In this way, the mapping manner of the reference signal sequence of the first object can be accurately determined.

In some embodiments, the first information is associated with at least one of the following: a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

For example, if the first information is associated with the type of the first object, or the first information includes the type of the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the type of the first object. In this way, the mapping manner of the reference signal sequence of the first object may be further determined.

For example, if the first information is associated with the configuration information of the first object, or the first information includes the configuration information of the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the configuration information of the first object. In this way, the mapping manner of the reference signal sequence of the first object may be further determined.

For example, if the first information is associated with the transmission period or TTI of the first object, or the first information includes the transmission period or TTI of the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the transmission period or TTI of the first object. In this way, the mapping manner of the reference signal sequence of the first object may be further determined.

For example, if the first information is associated with the transmission time window or transmission time limit of the first object, or the first information includes the transmission time window or transmission time limit of the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the transmission time window or transmission time limit of the first object. In this way, the mapping manner of the reference signal sequence of the first object may be further determined.

For example, if the first information is associated with the index or number of the first object, or the first information includes the index or number of the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the index or number of the first object. In this way, the mapping manner of the reference signal sequence of the first object may be further determined.

In some embodiments, the second information is associated with at least one of the following:

a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

For example, if the second information includes the frequency band corresponding to the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the frequency band corresponding to the first object. In this way, the mapping manner of the reference signal sequence of the first object may be further determined.

For example, if the second information includes the frequency range corresponding to the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the frequency band range corresponding to the first object. In this way, the mapping manner of the reference signal sequence of the first object may be further determined.

For example, if the second information includes the resource type corresponding to the first object, at least one of the candidate frequency domain position corresponding to the first object, the interval between adjacent candidate frequency domain positions corresponding to the first object, the offset of the candidate frequency domain position corresponding to the first object, the start position of the candidate frequency domain position corresponding to the first object, the synchronization raster corresponding to the candidate frequency domain position to which the first object is allowed to be mapped, and the channel raster corresponding to the candidate frequency domain position to which the first object is allowed to be mapped may be determined based on the resource type corresponding to the first object. In this way, the mapping manner of the reference signal sequence of the first object may be further determined.

In some embodiments, it is assumed that the first object is a synchronization signal or a broadcast signal, the synchronization signal or the broadcast signal may be mapped based on a binding relationship, predefined by a protocol, between an operating frequency band and a frequency domain resource position, to facilitate searching by the terminal during initial access. As shown in Table 6, a band 38 is used as an example, frequency domain positions that may be used for sending/receiving/searching of the synchronization signal or the broadcast signal are defined. The positions are a part of the GSCN, but a step size (step size) is related to a type of the synchronization signal or the broadcast signal. For a type of the synchronization signal or the broadcast signal, the two adjacent candidate frequency domain positions are positions corresponding to two GSCNs, and the two GSCNs are spaced by X numbers, that is, step size=X. For another type of the synchronization signal or the broadcast signal, the two adjacent candidate frequency domain positions are positions corresponding to two GSCNs, and the two GSCNs are spaced by Y numbers, that is, step size=Y. For example, a step size corresponding to a synchronization signal or a broadcast signal of RedCap may be large, thereby effectively reducing search complexity. This embodiment is not only applicable to the band 38 but to any band.

**Table 6**

| **Band** | **SCS** | **SS/PBCH structure/format/type** | **Range of GSCN (First-<Step size>-Last)** |
|---|---|---|---|
| 38 | 15 kHz | 1 | 5279-<X>-5419 |
| 38 | 15 kHz | 2 | 4829-<Y>-4969 |

In some embodiments, it is assumed that the first object is a synchronization signal or a broadcast signal, and frequency domain positions that may be used by the synchronization signal or the broadcast signal for sending/receiving/searching are defined. The positions are a part of an absolute radio-frequency channel number (Absolute Radio-Frequency Channel Number, ARFCN), but the step size (step size) is related to the type of the synchronization signal or the broadcast signal. For a type of the synchronization signal or the broadcast signal, the two adjacent candidate frequency domain positions are positions corresponding to two ARFCNs, and the two ARFCNs are spaced by X numbers, that is, step size=X. For another type of the synchronization signal or the broadcast signal, the two adjacent candidate frequency domain positions are positions corresponding to two ARFCNs, and the two ARFCNs are spaced by Y numbers, that is, step size=Y. For example, a step size corresponding to a synchronization signal or a broadcast signal of RedCap may be large, thereby effectively reducing search complexity.

In some embodiments, it is assumed that the first object is a synchronization signal or a broadcast signal, the synchronization signal or the broadcast signal may be mapped based on a binding relationship, predefined by a protocol, between an operating frequency band and a frequency domain resource position, to facilitate searching by the terminal during initial access. As shown in Table 7, a band 38 is used as an example, frequency domain positions that may be used for sending/receiving/searching of the synchronization signal or the broadcast signal are defined. The positions are a part of the GSCN, but an offset (offset) is related to a type of the synchronization signal or the broadcast signal. This embodiment is not only applicable to the band 38 but to any band.

For a type of the synchronization signal or the broadcast signal, the two adjacent candidate frequency domain positions are positions corresponding to two GSCNs and the two adjacent candidate frequency domain positions are spaced by X numbers, that is, step size=X. In addition, optionally, as shown in Table 8, starting from an initial position S1, every X GSCNs are candidate frequency domain positions. Optionally, a position corresponding to an offset of O1 GSCNs from a specific reference position is a candidate frequency domain position.

For another type of the synchronization signal or the broadcast signal, the two adjacent candidate frequency domain positions are positions corresponding to two GSCNs and the two adjacent candidate frequency domain positions are spaced by Y numbers, that is, step size=Y. In addition, optionally, as shown in Table 8, a band 38 is used as an example, and starting from an initial position S2, every Y GSCNs are candidate frequency domain positions. Optionally, a position corresponding to an offset of O2 GSCNs from a specific reference position is a candidate frequency domain position. X and Y may be the same, or may be different. O1 and O2 may be the same, or may be different. S1 and S2 may be the same, or may be different. For example, an offset corresponding to a synchronization signal or a broadcast signal of RedCap may be different from an offset corresponding to another synchronization signal or broadcast signal, and therefore corresponding positions are different. This embodiment is not only applicable to the band 38 but to any band.

**Table 7**

| **Band** | **SCS** | **SS/PBCH structure/format/type** | **Step size** | **Offset** |
|---|---|---|---|---|
| 38 | 15 kHz | 1 | X | O1 (for example, O1=0) |
| 38 | 15 kHz | 2 | Y | O2 (for example, O2=Y/2) |

**Table 8**

| **Band** | **SCS** | **SS/PBCH structure/format/type** | **Step size** | **Start point** |
|---|---|---|---|---|
| 38 | 15 kHz | 1 | X | S1 |
| 38 | 15 kHz | 2 | Y | S2 |

In some embodiments, it is assumed that the first object is a synchronization signal or a broadcast signal, the synchronization signal or the broadcast signal may be mapped based on a binding relationship, predefined by a protocol, between an operating frequency band and a frequency domain resource position, to facilitate searching by the terminal during initial access. As shown in Table 6, a band 38 is used as an example, frequency domain positions that may be used for sending/receiving/searching of the synchronization signal or the broadcast signal are defined. The positions are a part of the ARFCN, but an offset is related to a type of the synchronization signal or the broadcast signal. This embodiment is not only applicable to the band 38 but to any band.

For a type of the synchronization signal or the broadcast signal, the two adjacent candidate frequency domain positions are positions corresponding to two ARFCNs and the two candidate frequency domain positions are spaced by X numbers, that is, step size=X. In addition, optionally, as shown in Table 7, a band 38 is used as an example, and starting from an initial position S1, every X ARFCNs are candidate frequency domain positions. Alternatively, a position corresponding to an offset of O1 ARFCNs from a specific reference position is a candidate frequency domain position. This embodiment is not only applicable to the band 38 but to any band.

For another type of the synchronization signal or the broadcast signal, the two adjacent candidate frequency domain positions are positions corresponding to two ARFCNs and the two adjacent candidate frequency domain positions are spaced by Y numbers, that is, step size=Y. In addition, optionally, as shown in Table 8, a band 38 is used as an example, and starting from an initial position S2, every Y ARFCNs are candidate frequency domain positions. Alternatively, a position corresponding to an offset of O2 ARFCNs from a specific reference position is a candidate frequency domain position. This embodiment is not only applicable to the band 38 but to any band.

X and Y may be the same, or may be different. O1 and O2 may be the same, or may be different. S1 and S2 may be the same, or may be different. For example, an offset corresponding to a synchronization signal or a broadcast signal of RedCap may be different from an offset corresponding to another synchronization signal or broadcast signal, and therefore corresponding positions are different. For example, S1 corresponding to a synchronization signal or a broadcast signal of RedCap may be different from S2 corresponding to another synchronization signal or broadcast signal, and therefore corresponding positions are different.

It should be noted that the GSCN and the ARFCN are used as examples in the foregoing examples. Actually, another raster system or scale may be further defined. Therefore, the foregoing step size, offset, and start position may also be defined by using another raster system or scale. For example, a scale is defined, there is a frequency domain position every Z kHz, and step size=X indicates that there actually is a frequency domain position every Z*X kHz. The rest can be deduced by analogy.

For example, different or specific reference positions, synchronization rasters, channel rasters, step sizes (step size), offsets (offset), or start positions are used for synchronization signals or broadcast signals of full duplex and half duplex, to help stagger or avoid interference.

For example, different or specific reference positions, synchronization rasters, channel rasters, step sizes (step size), offsets (offset), or start positions are used for synchronization signals or broadcast signals of Artificial Intelligence (AI)-based access and fallback (fallback)-based access. Further, for example, a special search manner, such as a nonuniform step size, is used for AI-based (AI-based) access.

For example, different or specific reference positions, synchronization rasters, channel rasters, step sizes (step size), offsets (offset), or start positions are used for synchronization signals or broadcast signals of a macro cell and a small cell.

For example, different or specific reference positions, synchronization rasters, channel rasters, step sizes (step size), offsets (offset), or start positions are used for synchronization signals or broadcast signals of a cell/channel/BWP using the OTFS waveform.

For example, different or specific reference positions, synchronization rasters, channel rasters, step sizes (step size), offsets (offset), or start positions are used for synchronization signals/broadcast channels with a long period and a short period.

For example, different or specific reference positions, synchronization rasters, channel rasters, step sizes (step size), offsets (offset), or start positions are used for synchronization signals or broadcast signals with different or specific periodicities or with paging/SIB/RACH enabled or disabled.

For example, different or specific reference positions, synchronization rasters, channel rasters, step sizes (step size), offsets (offset), or start positions are used for synchronization signals or broadcast signals of the sensing service, the NTN, and the LP-SS/WUS.

For example, different or specific reference positions, synchronization rasters, channel rasters, step sizes (step size), offsets (offset), or start positions are used for synchronization signals or broadcast signals when a special service such as a data plane, an NPN, or a simplified protocol stack is enabled or disabled.

In some embodiments, a position of the first information is located at a specific position, or positions of at least a part of bits of the first information are located at specific positions.

Specifically, the specific position may be a position or a number of the first information in a plurality of pieces of information, or the specific position may be a position or a number of the at least part of bits of the first information in a string of bits.

In some embodiments, the specific position satisfies at least one of the following:
if the first object corresponds to at least two pieces of first information, the at least two pieces of first information have respective specific positions, or the at least part of bits of the first information have respective specific positions;
if at least two types of objects have respective corresponding first information, the respective corresponding first information of the at least two types of objects has respective specific positions;
if the first object corresponds to at least two pieces of first information, the specific position is a collection or a union of specific positions corresponding to the at least two pieces of first information, or the specific position is a position corresponding to an OR result, an exclusive OR result, a summation result, or an AND result of specific positions corresponding to the at least two pieces of first information;
if at least two types of objects have first information respectively corresponding to the at least two types of objects, the specific position is a collection or a union of specific positions of the first information respectively corresponding to the at least two types of objects, or the specific position is a position corresponding to an OR result, an exclusive OR result, a summation result, or an AND result of specific positions of the first information respectively corresponding to the at least two types of objects;
if the first object corresponds to at least two pieces of first information, a length of the specific position is a maximum value in quantities of bits needed by the at least two pieces of first information, or a length of the specific position is a sum or a weighted sum of quantities of bits needed by the at least two pieces of first information; and
if at least two types of objects have first information respectively corresponding to the at least two types of objects, a length of the specific location is a sum or a weighted sum of quantities of bits needed by the first information respectively corresponding to the at least two types of objects.

The length of the specific position is an integer multiple of S bits, and S is a positive integer.

The at least two types of objects include the first object.

Optionally, S may be agreed on through a protocol, or S may be configured by a network side, for example, S=8.

In some embodiments, the at least part of bits of the first information are generated at a physical layer, or the at least part of bits of the first information are generated at a high layer.

In some embodiments, the first information is carried by the first object.

In some embodiments, objects of different types are separately configured with the first information, or objects of different types separately determine the first information based on respective transmission time windows or transmission time limits, or an object of a specific type is configured with the first information. Specifically, the first object is an object of a specific type.

In some embodiments, objects of different types are separately configured with the second information, or objects of different types separately determine the second information based on respective transmission time windows or transmission time limits, or an object of a specific type is configured with the second information. Specifically, the first object is an object of a specific type.

In this embodiment of this application, a mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limit of the first object, and an index or a number of the first object. The second information includes at least one of the following: a frequency band corresponding to the type of the first object, a frequency range corresponding to the type of the first object, and a resource type corresponding to the type of the first object. In this embodiment of this application, the mapping manner of the reference signal sequence of the first object may be determined based on the first information or the second information, to determine mapping manners of reference signal sequences of different types. When detecting or receiving an object, the terminal may determine an object type based on the mapping manner of the reference signal sequence, and may also determine features (for example, a period, a bandwidth, search complexity, a time-frequency domain resource, carried information, and a generation manner) of objects of different types, to reduce complexity of detecting objects of different types.

An execution body of the wireless communication method provided in embodiments of this application may be a wireless communication apparatus or a processing unit in the wireless communication apparatus that is configured to perform the wireless communication method. In this embodiment of this application, the wireless communication apparatus provided in embodiments of this application is described by using an example in which the wireless communication apparatus performs the wireless communication method.

FIG. 4 is a schematic block diagram of a wireless communication apparatus 300 according to an embodiment of this application. As shown in FIG. 4, the wireless communication apparatus 300 includes:
a transceiver unit 310, configured to detect or receive a reference signal sequence of a first object.

A mapping manner of the reference signal sequence of the first object is related to the first information, or a mapping manner of the reference signal sequence of the first object is related to the second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

In some embodiments, the configuration information of the first object includes at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

In some embodiments, when the mapping manner of the reference signal sequence of the first object is related to the first information, a position to which the reference signal sequence of the first object is mapped is determined based on first position information.

The first position information includes at least one of the following: a first reference position, a first offset, a first start position, a first step size, a first synchronization raster, and a first channel raster.

The first position information is related to the first information.

In some embodiments, that the first position information is related to the first information includes:
the first position information is determined based on a value of at least a part of bits of the first information; or
the first position information is determined based on a value of at least a part of bits of the first information and an identifier of at least one physical resource.

Each of the at least one physical resource is one of the following: a cell, a carrier, a BWP, a resource pool, a frequency band, and a subband.

In some embodiments, when the first position information is determined based on the value of the at least part of bits of the first information, the first position information is determined based on a result of the value of the at least part of bits of the first information mod C.

C represents a frequency domain interval between two adjacent reference signal resources, or C represents a value of a frequency domain interval between two adjacent reference signal resources plus 1, or C represents an interval between two adjacent objects, or C represents a total quantity of object types, and mod represents a modulo operation.

Types of the two adjacent objects are the same as the type of the first object.

In some embodiments, when the first position information is determined based on the value of at least part of bits of the first information and the identifier of the at least one physical resource, the first position information is determined based on a result of (value of the at least part of bits of the first information mod C)*D+ID mod D, or the first position information is determined based on a result of the value of the at least part of bits of the first information mod C+(ID mod D)*C, or the first position information is determined based on a result of [(value of the at least part of bits of the first information mod C)*D+ID mod D] mod E, or the first position information is determined based on a result of [value of the at least part of bits of the first information mod C+(ID mod D)*C] mod E.

C represents a frequency domain interval between two adjacent reference signal resources, or C represents a value of a frequency domain interval between two adjacent reference signal resources plus 1, or C represents an interval between two adjacent objects, or C represents a total quantity of object types.

D represents a frequency domain interval between two adjacent reference signal resources, or D represents a value of a frequency domain interval between two adjacent reference signal resources plus 1, or D represents an interval between two adjacent objects, or D represents a total quantity of object types.

E represents a frequency domain interval between two adjacent reference signal resources, or E represents a value of a frequency domain interval between two adjacent reference signal resources plus 1, or E represents an interval between two adjacent objects, or E represents a total quantity of object types.

ID represents the identifier of the at least one physical resource, types of the two adjacent objects are the same as the type of the first object, and mod represents a modulo operation.

In some embodiments, when the mapping manner of the reference signal sequence of the first object is related to the second information, a position to which the reference signal sequence of the first object is mapped is determined based on second position information.

The second position information includes at least one of the following: a second reference position, a second offset, a second start position, a second step size, a second synchronization raster, and a second channel raster.

The second position information is related to the second information.

In some embodiments, the position to which the reference signal sequence of the first object is mapped includes at least one of the following:
a time domain position and a frequency domain position.

In some embodiments, the mapping manner of the reference signal sequence of the first object is determined based on at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, the first information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, the second information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, objects of different types are separately configured with the first information, or objects of different types separately determine the first information based on respective transmission time windows or transmission time limitations, or an object of a specific type is configured with the first information; or
objects of different types are separately configured with the second information, or objects of different types separately determine the second information based on respective transmission time windows or transmission time limits, or an object of a specific type is configured with the second information.

In some embodiments, the transceiver unit 310 may be a communication interface, a transceiver, or an input/output interface of a communication chip or a system on a chip.

It should be understood that the wireless communication apparatus 300 according to this embodiment of this application may correspond to the terminal in the method embodiment of this application, and units in the wireless communication apparatus 300 are separately configured to implement corresponding procedures of the terminal in the method 200 shown in FIG. 3. For brevity, details are not described herein again.

Therefore, in this embodiment of this application, a mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limit of the first object, and an index or a number of the first object. The second information includes at least one of the following: a frequency band corresponding to the type of the first object, a frequency range corresponding to the type of the first object, and a resource type corresponding to the type of the first object. In this embodiment of this application, the mapping manner of the reference signal sequence of the first object may be determined based on the first information or the second information, to determine mapping manners of reference signal sequences of different types. When detecting or receiving an object, the terminal may determine an object type based on the mapping manner of the reference signal sequence, and may also determine features (for example, a period, a bandwidth, search complexity, a time-frequency domain resource, carried information, and a generation manner) of objects of different types, to reduce complexity of detecting objects of different types.

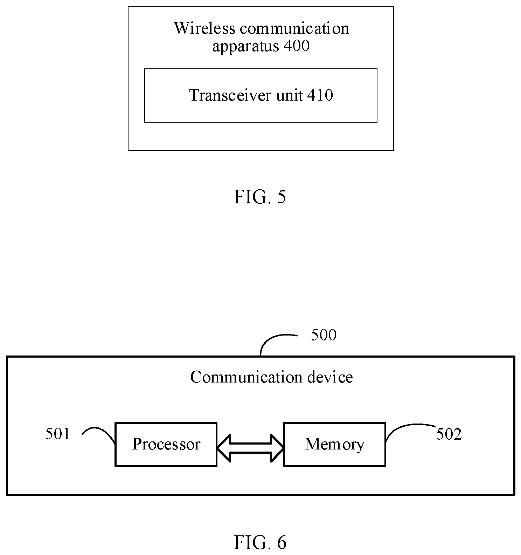

FIG. 5 is a schematic block diagram of a wireless communication apparatus 400 according to an embodiment of this application. As shown in FIG. 5, the wireless communication apparatus 400 includes:
a transceiver unit 410, configured to send a reference signal sequence of a first object.

A mapping manner of the reference signal sequence of the first object is related to the first information, or a mapping manner of the reference signal sequence of the first object is related to the second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

In some embodiments, the configuration information of the first object includes at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

In some embodiments, when the mapping manner of the reference signal sequence of the first object is related to the first information, a position to which the reference signal sequence of the first object is mapped is determined based on first position information.

The first position information includes at least one of the following: a first reference position, a first offset, a first start position, a first step size, a first synchronization raster, and a first channel raster.

The first position information is related to the first information.

In some embodiments, that the first position information is related to the first information includes:
the first position information is determined based on a value of at least a part of bits of the first information; or
the first position information is determined based on a value of at least a part of bits of the first information and an identifier of at least one physical resource.

Each of the at least one physical resource is one of the following: a cell, a carrier, a BWP, a resource pool, a frequency band, and a subband.

In some embodiments, when the first position information is determined based on the value of the at least part of bits of the first information, the first position information is determined based on a result of the value of the at least part of bits of the first information mod C.

C represents a frequency domain interval between two adjacent reference signal resources, or C represents a value of a frequency domain interval between two adjacent reference signal resources plus 1, or C represents an interval between two adjacent objects, or C represents a total quantity of object types, and mod represents a modulo operation.

Types of the two adjacent objects are the same as the type of the first object.

In some embodiments, when the first position information is determined based on the value of at least part of bits of the first information and the identifier of the at least one physical resource, the first position information is determined based on a result of (value of the at least part of bits of the first information mod C)*D+ID mod D, or the first position information is determined based on a result of the value of the at least part of bits of the first information mod C+(ID mod D)*C, or the first position information is determined based on a result of [(value of the at least part of bits of the first information mod C)*D+ID mod D] mod E, or the first position information is determined based on a result of [(value of the at least part of bits of the first information mod C)+(ID mod D)*C] mod E.

C represents a frequency domain interval between two adjacent reference signal resources, or C represents a value of a frequency domain interval between two adjacent reference signal resources plus 1, or C represents an interval between two adjacent objects, or C represents a total quantity of object types.

D represents a frequency domain interval between two adjacent reference signal resources, or D represents a value of a frequency domain interval between two adjacent reference signal resources plus 1, or D represents an interval between two adjacent objects, or D represents a total quantity of object types.

E represents a frequency domain interval between two adjacent reference signal resources, or E represents a value of a frequency domain interval between two adjacent reference signal resources plus 1, or E represents an interval between two adjacent objects, or E represents a total quantity of object types.

Types of the two adjacent objects are the same as the type of the first object, ID represents the identifier of the at least one physical resource, and mod represents a modulo operation.

In some embodiments, when the mapping manner of the reference signal sequence of the first object is related to the second information, a position to which the reference signal sequence of the first object is mapped is determined based on second position information.

The second position information includes at least one of the following: a second reference position, a second offset, a second start position, a second step size, a second synchronization raster, and a second channel raster.

The second position information is related to the second information.

In some embodiments, the position to which the reference signal sequence of the first object is mapped includes at least one of the following:
a time domain position and a frequency domain position.

In some embodiments, the mapping manner of the reference signal sequence of the first object is determined based on at least one of the following:

a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, the first information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, the second information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

In some embodiments, objects of different types are separately configured with the first information, or objects of different types separately determine the first information based on respective transmission time windows or transmission time limits, or an object of a specific type is configured with the first information.

Alternatively, objects of different types are separately configured with the second information, or objects of different types separately determine the second information based on respective transmission time windows or transmission time limits, or an object of a specific type is configured with the second information.

In some embodiments, the transceiver unit 410 may be a communication interface, a transceiver, or an input/output interface of a communication chip or a system-on-a-chip.

It should be understood that the wireless communication apparatus 400 according to this embodiment of this application may correspond to the network side device in the method embodiment of this application, and units in the wireless communication apparatus 400 are separately configured to implement corresponding procedures of the network side device in the method 200 shown in FIG. 3. For brevity, details are not described herein again.

Therefore, in this embodiment of this application, a mapping manner of the reference signal sequence of the first object is related to first information, or a mapping manner of the reference signal sequence of the first object is related to second information. The first information is associated with at least one of the following, or the first information includes at least one of the following: a type of the first object, configuration information of the first object, a transmission period or a TTI of the first object, a transmission time window or a transmission time limitation of the first object, and an index or a number of the first object. The second information includes at least one of the following: a frequency band corresponding to the type of the first object, a frequency range corresponding to the type of the first object, and a resource type corresponding to the type of the first object. In this embodiment of this application, the mapping manner of the reference signal sequence of the first object may be determined based on the first information or the second information, to determine mapping manners of reference signal sequences of different types. When detecting or receiving an object, the terminal may determine an object type based on the mapping manner of the reference signal sequence, and may also determine features (for example, a period, a bandwidth, search complexity, a time-frequency domain resource, carried information, and a generation manner) of objects of different types, to reduce complexity of detecting objects of different types.

The wireless communication apparatus in this embodiment of this application may be an electronic device, for example, an electronic device having an operating system, or may be a component in an electronic device, such as an integrated circuit or a chip. The electronic device may be a terminal or a network side device, or may be another device other than the terminal or the network side device. For example, the terminal may include, but is not limited to, the types of the terminals 11 listed above, the network side device may include, but is not limited to, the types of network side devices 12 listed above, and the another device may be a server, a network attached storage (Network Attached Storage, NAS), or the like. This is not specifically limited in the embodiment of this application.

The wireless communication apparatus provided in this embodiment of this application can implement the processes implemented in the method embodiment in FIG. 3 and achieve same technical effects. To avoid repetition, details are not described herein again.

As shown in FIG. 6, an embodiment of this application further provides a communication device 500, including a processor 501 and a memory 502. The memory 502 stores a program or instructions capable of being run on the processor 501. For example, when the communication device 500 is a terminal, and the program or the instructions are executed by the processor 501, the steps performed by the terminal in the foregoing wireless communication method embodiment are implemented, and same technical effects can be achieved. To avoid repetition, details are not described herein again. For example, when the communication device 500 is a network side device, and the program or the instructions are executed by the processor 501, the steps performed by the network side device in the foregoing wireless communication method embodiment are implemented, and same technical effects can be achieved. To avoid repetition, details are not described herein again.

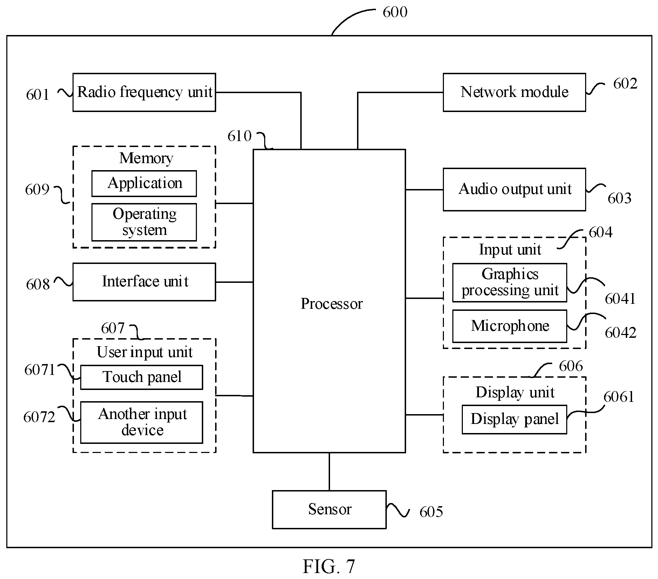

An embodiment of this application further provides a terminal, including a processor and a communication interface. The communication interface is coupled to the processor, and the processor is configured to run a program or instructions, to implement the steps performed by the terminal in the method embodiment shown in FIG. 3. The terminal embodiment corresponds to the foregoing method embodiment on a terminal side. Implementation processes and implementations of the foregoing method embodiment are applicable to the terminal embodiment, and can achieve same technical effects. Details are described below. FIG. 7 is a schematic diagram of a hardware structure of a terminal for implementing an embodiment of this application.

The terminal 600 includes but is not limited to at least a part of components such as a radio frequency unit 601, a network module 602, an audio output unit 603, an input unit 604, a sensor 605, a display unit 606, a user input unit 607, an interface unit 608, a memory 609, and a processor 610.

It may be understood by a person skilled in the art that the terminal 600 may further include a power supply (for example, a battery) supplying power to the components. The power supply may be logically connected to the processor 610 through a power management system, to implement functions such as charging and discharging management and power consumption management are implemented through the power management system. The terminal structure shown in FIG. 7 does not constitute a limitation on the terminal, and the terminal may include more or fewer components than shown, or combine some components, or have different component arrangements. This is not described herein again.

It should be understood that in this embodiment of this application, the input unit 604 may include a graphics processing unit (Graphics Processing Unit, GPU) 6041 and a microphone 6042. The graphics processing unit 6041 processes image data of a static picture or a video that is obtained by an image capture apparatus (for example, a camera) in a video capture mode or an image capture mode. The display unit 606 may include a display panel 6061. The display panel 6061 may be configured in a form of a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a function button (for example, a volume control button or a power on/off button), a trackball, a mouse, and a joystick. Details are not described herein again.

In this embodiment of this application, after receiving downlink data from a network side device, the radio frequency unit 601 may transmit the data to the processor 610 for processing. In addition, the radio frequency unit 601 may transmit uplink data to the network side device. Usually, the radio frequency unit 601 includes but is not limited to an antenna, an amplifier, a transceiver, a coupler, a low noise amplifier, a duplexer, and the like.

The memory 609 may be configured to store a software program or instructions and various data. The memory 609 may mainly include a first storage area storing the program or the instructions and a second storage area storing the data. The first storage area may store an operating system, an application or instructions required for at least one function (for example, a sound play function and an image play function), and the like. In addition, the memory 609 may include a volatile memory or a non-volatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). The memory 609 described in this embodiment of this application includes, but not limited to, these memories and any memory of another appropriate type.

The processor 610 may include at least one processing unit. Optionally, the processor 610 may integrate an application processor and a modem processor. The application processor mainly processes operations involving an operating system, a user interface, an application program, and the like, and the modem processor mainly processes a wireless communication signal, for example, a baseband processor. It can be understood that the modem processor may not be integrated into the processor 610.

The radio frequency unit 601 is configured to detect or receive a reference signal sequence of a first object.

A mapping manner of the reference signal sequence of the first object is related to the first information, or a mapping manner of the reference signal sequence of the first object is related to the second information.

The first information is associated with at least one of the following, or the first information includes at least one of the following: a type of the first object, configuration information of the first object, a transmission period or a transmission time interval TTI of the first object, a transmission time window or a transmission time limit of the first object, and an index or a number of the first object.

The second information includes at least one of the following: a frequency band corresponding to the type of the first object, a frequency range corresponding to the type of the first object, and a resource type corresponding to the type of the first object.

The first object includes at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

It may be understood that, for implementation processes of the implementations mentioned in this embodiment, refer to related descriptions in the method embodiment, and same or corresponding technical effects are achieved. To avoid repetition, details are not described herein again.

An embodiment of this application further provides a network side device, including a processor and a communication interface. The communication interface is coupled to the processor, and the processor is configured to run a program or instructions, to implement the steps performed by the network side device in the method embodiment shown in FIG. 3. The network side device embodiment corresponds to the foregoing method embodiment of the network side device. Implementation processes and implementations of the foregoing method embodiment are applicable to the network side device embodiment, and can achieve same technical effects. For brevity, details are not described herein again.

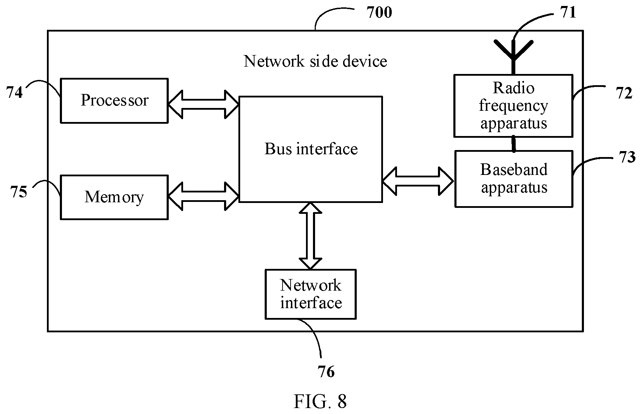

Specifically, an embodiment of this application further provides a network side device. As shown in FIG. 8, the network side device 700 includes an antenna 71, a radio frequency apparatus 72, a baseband apparatus 73, a processor 74, and a memory 75. The antenna 71 is connected to the radio frequency apparatus 72. In an uplink direction, the radio frequency apparatus 72 receives information through the antenna 71, and sends the received information to the baseband apparatus 73 for processing. In a downlink direction, the baseband apparatus 73 processes to-be-sent information, and transmits the information to the radio frequency apparatus 72; and the radio frequency apparatus 72 processes the received information and then sends the information out through the antenna 71.

The method performed by the network side device in the foregoing embodiment may be implemented in the baseband apparatus 73, and the baseband apparatus 73 includes a baseband processor.

The baseband apparatus 73 may include, for example, at least one baseband board. At least two chips are disposed on the baseband board. As shown in FIG. 7, one of the chips is, for example, the baseband processor, and is connected to the memory 75 through a bus interface, to invoke a program in the memory 75 to perform the operation of the network side device shown in the foregoing method embodiment.

The network side device may further include a network interface 76. The interface is, for example, a common public radio interface (Common Public Radio Interface, CPRI).

Specifically, the network side device 700 in this embodiment of this application further includes instructions or a program stored in the memory 75 and capable of being run on the processor 74. The processor 74 invokes the instructions or the program in the memory 75 to perform the method performed by the units shown in FIG. 5, and same technical effects are achieved. To avoid repetition, details are not described herein again.

An embodiment of this application further provides a readable storage medium. The readable storage medium stores a program or instructions. When the program or the instructions are executed by a processor, the processes of the foregoing wireless communication method embodiment are implemented, and same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement the processes of the foregoing wireless communication method embodiment, and same technical effects can be achieved. To avoid repetition, details are not described herein again.

It should be understood that the chip mentioned in this embodiment of this application may also be referred to as a system-level chip, a system chip, a chip system, a system on a chip, or the like.

An embodiment of this application further provides a computer program/program product. The computer program/program product is stored in a storage medium. The computer program/program product is executed by at least one processor to implement the processes of the foregoing wireless communication method embodiment, and same technical effects can be achieved. To avoid repetition, details are not described herein again.

An embodiment of this application further provides a communication system, including a terminal and a network side device. The terminal is configured to perform the steps performed by the terminal in the foregoing wireless communication method, and the network side device is configured to perform the steps performed by the network side device in the foregoing wireless communication method.

It should be noted that in this specification, terms "comprise", "include", and any other variants thereof are intended to encompass non-exclusive inclusion, so that a process, a method, an article, or an apparatus including a series of elements not only includes those elements, but also includes another element not listed explicitly, or further includes intrinsic elements of the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and apparatus in implementations of this application is not limited to performing the functions in the order shown or discussed, but may also include performing the functions in a substantially simultaneous manner or in a reverse order depending on the functions involved. For example, the described method may be performed in an order different from that described, and various steps may be added, omitted, or combined. In addition, features described with reference to some examples may be combined in other examples.

According to the descriptions of the foregoing implementations, a person skilled in the art can clearly understand that the method in the foregoing embodiments may be implemented by a computer software product in addition to a necessary universal hardware platform or by hardware only. The computer software product is stored in a storage medium (for example, a ROM, a RAM, a magnetic disk, or an optical disc), and includes several instructions for instructing a terminal or a network side device to perform the method described in embodiments of this application.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may develop many other implementations without departing from the principle of this application and the protection scope of the claims, and all such implementations fall within the protection scope of this application.

## Claims

1. A wireless communication method, comprising:
detecting or receiving, by a terminal, a reference signal sequence of a first object, wherein
a mapping manner of the reference signal sequence of the first object is related to first information, or a mapping manner of the reference signal sequence of the first object is related to second information;
the first information is associated with at least one of the following, or the first information comprises at least one of the following: a type of the first object, configuration information of the first object, a transmission period or a transmission time interval TTI of the first object, a transmission time window or a transmission time limit of the first object, and an index or a number of the first object;
the second information comprises at least one of the following: a frequency band corresponding to the type of the first object, a frequency range corresponding to the type of the first object, and a resource type corresponding to the type of the first object; and
the first object comprises at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

2. The method according to claim 1, wherein
the configuration information of the first object comprises at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

3. The method according to claim 1 or 2, wherein
when the mapping manner of the reference signal sequence of the first object is related to the first information, a position to which the reference signal sequence of the first object is mapped is determined based on first position information;
the first position information comprises at least one of the following: a first reference position, a first offset, a first start position, a first step size, a first synchronization raster, and a first channel raster; and
the first position information is related to the first information.

4. The method according to claim 3, wherein
that the first position information is related to the first information comprises:
the first position information is determined based on a value of at least a part of bits of the first information; or
the first position information is determined based on a value of at least a part of bits of the first information and an identifier of at least one physical resource, wherein
each of the at least one physical resource is one of the following: a cell, a carrier, a BWP, a resource pool, a frequency band, and a subband.

5. The method according to claim 4, wherein
when the first position information is determined based on the value of the at least part of bits of the first information, the first position information is determined based on a result of the value of the at least part of bits of the first information mod C;
C represents a frequency domain interval between two adjacent reference signal resources, or C represents a value of a frequency domain interval between two adjacent reference signal resources plus 1, or C represents an interval between two adjacent objects, or C represents a total quantity of object types, and mod represents a modulo operation; and
types of the two adjacent objects are the same as the type of the first object.

6. The method according to claim 4, wherein
when the first position information is determined based on the value of at least part of bits of the first information and the identifier of the at least one physical resource, the first position information is determined based on a result of (value of the at least part of bits of the first information mod C)*D+ID mod D, or the first position information is determined based on a result of the value of the at least part of bits of the first information mod C+(ID mod D)*C, or the first position information is determined based on a result of [(value of the at least part of bits of the first information mod C)*D+ID mod D] mod E, or the first position information is determined based on a result of [value of the at least part of bits of the first information mod C+(ID mod D)*C] mod E;
C represents a frequency domain interval between two adjacent reference signal resources, or C represents a value of a frequency domain interval between two adjacent reference signal resources plus 1, or C represents an interval between two adjacent objects, or C represents a total quantity of object types;
D represents a frequency domain interval between two adjacent reference signal resources, or D represents a value of a frequency domain interval between two adjacent reference signal resources plus 1, or D represents an interval between two adjacent objects, or D represents a total quantity of object types;
E represents a frequency domain interval between two adjacent reference signal resources, or E represents a value of a frequency domain interval between two adjacent reference signal resources plus 1, or E represents an interval between two adjacent objects, or E represents a total quantity of object types; and
ID represents the identifier of the at least one physical resource, types of the two adjacent objects are the same as the type of the first object, and mod represents a modulo operation.

7. The method according to claim 1, wherein
when the mapping manner of the reference signal sequence of the first object is related to the second information, a position to which the reference signal sequence of the first object is mapped is determined based on second position information;
the second position information comprises at least one of the following: a second reference position, a second offset, a second start position, a second step size, a second synchronization raster, and a second channel raster; and
the second position information is related to the second information.

8. The method according to any one of claims 3 to 7, wherein
the position to which the reference signal sequence of the first object is mapped comprises at least one of the following:
a time domain position and a frequency domain position.

9. The method according to any one of claims 1 to 8, wherein
the mapping manner of the reference signal sequence of the first object is determined based on at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

10. The method according to claim 9, wherein
the first information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

11. The method according to claim 9, wherein
the second information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

12. The method according to any one of claims 1 to 11, wherein
objects of different types are separately configured with the first information, or objects of different types separately determine the first information based on respective transmission time windows or transmission time limits, or an object of a specific type is configured with the first information; or
objects of different types are separately configured with the second information, or objects of different types separately determine the second information based on respective transmission time windows or transmission time limits, or an object of a specific type is configured with the second information.

13. A wireless communication method, comprising:
sending, by a network side device, a reference signal sequence of a first object, wherein
a mapping manner of the reference signal sequence of the first object is related to first information, or a mapping manner of the reference signal sequence of the first object is related to second information;
the first information is associated with at least one of the following, or the first information comprises at least one of the following: a type of the first object, configuration information of the first object, a transmission period or a transmission time interval TTI of the first object, a transmission time window or a transmission time limit of the first object, and an index or a number of the first object;
the second information comprises at least one of the following: a frequency band corresponding to the type of the first object, a frequency range corresponding to the type of the first object, and a resource type corresponding to the type of the first object; and
the first object comprises at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

14. The method according to claim 13, wherein
the configuration information of the first object comprises at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

15. The method according to claim 13 or 14, wherein
when the mapping manner of the reference signal sequence of the first object is related to the first information, a position to which the reference signal sequence of the first object is mapped is determined based on first position information;
the first position information comprises at least one of the following: a first reference position, a first offset, a first start position, a first step size, a first synchronization raster, and a first channel raster; and
the first position information is related to the first information.

16. The method according to claim 15, wherein
that the first position information is related to the first information comprises:
the first position information is determined based on a value of at least a part of bits of the first information; or
the first position information is determined based on a value of at least a part of bits of the first information and an identifier of at least one physical resource, wherein
each of the at least one physical resource is one of the following: a cell, a carrier, a BWP, a resource pool, a frequency band, and a subband.

17. The method according to claim 16, wherein
when the first position information is determined based on the value of the at least part of bits of the first information, the first position information is determined based on a result of the value of the at least part of bits of the first information mod C;
C represents a frequency domain interval between two adjacent reference signal resources, or C represents a value of a frequency domain interval between two adjacent reference signal resources plus 1, or C represents an interval between two adjacent objects, or C represents a total quantity of object types, and mod represents a modulo operation; and
types of the two adjacent objects are the same as the type of the first object.

18. The method according to claim 16, wherein
when the first position information is determined based on the value of at least part of bits of the first information and the identifier of the at least one physical resource, the first position information is determined based on a result of (value of the at least part of bits of the first information mod C)*D+ID mod D, or the first position information is determined based on a result of the value of the at least part of bits of the first information mod C+(ID mod D)*C, or the first position information is determined based on a result of [(value of the at least part of bits of the first information mod C)*D+ID mod D] mod E, or the first position information is determined based on a result of [(value of the at least part of bits of the first information mod C)+(ID mod D)*C] mod E;
C represents a frequency domain interval between two adjacent reference signal resources, or C represents a value of a frequency domain interval between two adjacent reference signal resources plus 1, or C represents an interval between two adjacent objects, or C represents a total quantity of object types;
D represents a frequency domain interval between two adjacent reference signal resources, or D represents a value of a frequency domain interval between two adjacent reference signal resources plus 1, or D represents an interval between two adjacent objects, or D represents a total quantity of object types;
E represents a frequency domain interval between two adjacent reference signal resources, or E represents a value of a frequency domain interval between two adjacent reference signal resources plus 1, or E represents an interval between two adjacent objects, or E represents a total quantity of object types; and
types of the two adjacent objects are the same as the type of the first object, ID represents the identifier of the at least one physical resource, and mod represents a modulo operation.

19. The method according to claim 13, wherein
when the mapping manner of the reference signal sequence of the first object is related to the second information, a position to which the reference signal sequence of the first object is mapped is determined based on second position information;
the second position information comprises at least one of the following: a second reference position, a second offset, a second start position, a second step size, a second synchronization raster, and a second channel raster; and
the second position information is related to the second information.

20. The method according to any one of claims 15 to 19, wherein
the position to which the reference signal sequence of the first object is mapped comprises at least one of the following:
a time domain position and a frequency domain position.

21. The method according to any one of claims 13 to 20, wherein
the mapping manner of the reference signal sequence of the first object is determined based on at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

22. The method according to claim 21, wherein
the first information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

23. The method according to claim 21, wherein
the second information is associated with at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

24. A wireless communication apparatus, comprising:
a transceiver unit, configured to detect or receive a first object, or detect or receive a reference signal sequence of a first object, wherein
a mapping manner of the reference signal sequence of the first object is related to first information, or a mapping manner of the reference signal sequence of the first object is related to second information;
the first information is associated with at least one of the following, or the first information comprises at least one of the following: a type of the first object, configuration information of the first object, a transmission period or a transmission time interval TTI of the first object, a transmission time window or a transmission time limit of the first object, and an index or a number of the first object;
the second information comprises at least one of the following: a frequency band corresponding to the type of the first object, a frequency range corresponding to the type of the first object, and a resource type corresponding to the type of the first object; and
the first object comprises at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

25. The apparatus according to claim 24, wherein
the configuration information of the first object comprises at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

26. The apparatus according to claim 24 or 25, wherein
when the mapping manner of the reference signal sequence of the first object is related to the first information, a position to which the reference signal sequence of the first object is mapped is determined based on first position information;
the first position information comprises at least one of the following: a first reference position, a first offset, a first start position, a first step size, a first synchronization raster, and a first channel raster; and
the first position information is related to the first information.

27. The apparatus according to claim 24, wherein
when the mapping manner of the reference signal sequence of the first object is related to the second information, a position to which the reference signal sequence of the first object is mapped is determined based on second position information;
the second position information comprises at least one of the following: a second reference position, a second offset, a second start position, a second step size, a second synchronization raster, and a second channel raster; and
the second position information is related to the second information.

28. The apparatus according to any one of claims 24 to 27, wherein
the mapping manner of the reference signal sequence of the first object is determined based on at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

29. A wireless communication apparatus, comprising:
a transceiver unit, configured to send a reference signal sequence of a first object, wherein
a mapping manner of the reference signal sequence of the first object is related to first information, or a mapping manner of the reference signal sequence of the first object is related to second information;
the first information is associated with at least one of the following, or the first information comprises at least one of the following: a type of the first object, configuration information of the first object, a transmission period or a transmission time interval TTI of the first object, a transmission time window or a transmission time limit of the first object, and an index or a number of the first object;
the second information comprises at least one of the following: a frequency band corresponding to the type of the first object, a frequency range corresponding to the type of the first object, and a resource type corresponding to the type of the first object; and
the first object comprises at least one of the following: a synchronization signal, a broadcast signal, a synchronization signal block SSB, a master information block MIB, a RACH occasion RO, a paging occasion PO, a paging frame PF, a physical uplink shared channel PUSCH occasion, a carrier, or a search space.

30. The apparatus according to claim 29, wherein
the configuration information of the first object comprises at least one of the following:
bandwidth part BWP information, time-frequency resource block information, duplex mode information, an access manner or method, type information of a cell, type information of a transmission reception point TRP, waveform information, radio access network RAN service information, energy saving feature information, period information, high-layer feature information, transmission manner information, destination information, terminal information, and network side device information.

31. The apparatus according to claim 29 or 30, wherein
when the mapping manner of the reference signal sequence of the first object is related to the first information, a position to which the reference signal sequence of the first object is mapped is determined based on first position information;
the first position information comprises at least one of the following: a first reference position, a first offset, a first start position, a first step size, a first synchronization raster, and a first channel raster; and
the first position information is related to the first information.

32. The apparatus according to claim 29, wherein
when the mapping manner of the reference signal sequence of the first object is related to the second information, a position to which the reference signal sequence of the first object is mapped is determined based on second position information;
the second position information comprises at least one of the following: a second reference position, a second offset, a second start position, a second step size, a second synchronization raster, and a second channel raster; and
the second position information is related to the second information.

33. The apparatus according to any one of claims 29 to 32, wherein
the mapping manner of the reference signal sequence of the first object is determined based on at least one of the following:
a candidate frequency domain position corresponding to the first object, an interval between adjacent candidate frequency domain positions corresponding to the first object, an offset of the candidate frequency domain position corresponding to the first object, a start position of the candidate frequency domain position corresponding to the first object, a synchronization raster corresponding to a candidate frequency domain position to which the first object is allowed to be mapped, and a channel raster corresponding to a candidate frequency domain position to which the first object is allowed to be mapped.

34. A terminal, comprising a transceiver, a processor, and a memory, wherein the memory stores a program or instructions capable of being run on the processor, and when the program or the instructions are executed by the processor, the steps of the wireless communication method according to any one of claims 1 to 12 are implemented.

35. A network side device, comprising a transceiver, a processor, and a memory, wherein the memory stores a program or instructions capable of being run on the processor, and when the program or the instructions are executed by the processor, the steps of the wireless communication method according to any one of claims 13 to 23 are implemented.

36. A readable storage medium, wherein the readable storage medium stores a program or instructions, and when the program or the instructions are executed by the processor, the steps of the wireless communication method according to any one of claims 1 to 12 are implemented, or the steps of the wireless communication method according to any one of claims 13 to 23 are implemented.
